# EUROPEAN PATENT APPLICATION

(11) **EP 4 851 987 A1**
(43) Date of publication of application: **09.12.2026**
(21) Application number: 25824646.1
(22) Date of filing: 24.04.2025
(51) Int. Cl.: G10L 13/02

(54) **AUDIO PROCESSING METHOD, AUDIO PROCESSING APPARATUS, ELECTRONIC DEVICE, COMPUTER-READABLE STORAGE MEDIUM AND COMPUTER PROGRAM PRODUCT**

(30) Priority: 28.06.2024 CN 202410865331
(71) Applicant: Tencent Technology (Shenzhen) Company Limited, Shenzhen, Guangdong 518057 (CN)
(72) Inventor: GU, Yu, Shenzhen, Guangdong 518057 (CN)
(74) Representative: Eisenführ Speiser
(86) International application number: PCT/CN2025/090882
(87) International publication number: WO 2026/001257

(57) **Abstract**

An audio processing method and apparatus and a computer-readable storage medium. The method comprises: receiving an audio synthesis request, the audio synthesis request comprising audio data to be synthesized (310); on the basis of said audio data, generating chunk hidden vectors of a plurality of chunks, each chunk comprising a plurality of consecutive audio frames in a target audio, the target audio being an audio synthesized on the basis of the audio synthesis request, the plurality of chunks being sorted on the basis of the sequence of the audio frames contained in the chunks, and the audio frames of every two adjacent chunks being consecutive (320); and inputting the plurality of chunk hidden vectors into an audio generation network on the basis of the sequence of the chunks, the audio generation network being used for executing the following processing: with regard to each chunk in the target audio, while playing back a chunk previous to said chunk, generating the audio frames of said chunk on the basis of the chunk hidden vector of said chunk and the chunk hidden vector of the chunk previous to said chunk, and adding to a target playback queue the generated audio frames to be played back (330).

## Description

### RELATED APPLICATION

This application claims priority to Chinese Patent Application No. 202410865331.5, filed on June 28, 2024, which is incorporated herein by reference in its entirety.

### FIELD

Embodiments of this disclosure relate to the field of artificial intelligence, and in particular, to an audio processing method, an audio processing apparatus, an electronic device, a computer-readable storage medium, and a computer program product.

### BACKGROUND

In current audio processing, when an audio synthesis request of an object is received, entire audio is typically synthesized based on audio data (for example, a music score) provided by the object, and then played to the object. Synthesizing the entire audio is time-consuming. Therefore, response efficiency of audio synthesis processing in the related technology is low. There is a lack of a technology that can improve response efficiency of audio synthesis while ensuring synthesis accuracy.

### SUMMARY

In view of this, embodiments of this disclosure provide an audio processing method, an audio processing apparatus, an electronic device, a computer-readable storage medium, and a computer program product, to improve response efficiency of an audio synthesis request while maintaining audio synthesis smoothness.

According to an aspect of the embodiments of this disclosure, an audio processing method is provided. The method is performed by an electronic device and includes:
receiving an audio synthesis request, the audio synthesis request including to-be-synthesized audio data;
generating chunk hidden vectors of a plurality of chunks based on the to-be-synthesized audio data, each chunk including a plurality of consecutive audio frames in target audio, the target audio being audio synthesized based on the audio synthesis request, the plurality of chunks being sorted based on a sequence of audio frames included in the chunks, and audio frames of two adjacent chunks being consecutive; and
inputting the plurality of chunk hidden vectors into an audio generation network based on a sequence of the chunks, the audio generation network being configured to perform the following processing: generating, for each chunk in the target audio, an audio frame of the chunk based on a chunk hidden vector of the chunk and a chunk hidden vector of a preceding chunk of the chunk while playing the preceding chunk of the chunk, and adding the generated audio frame to a target playing queue for playing.

According to an aspect of the embodiments of this disclosure, an audio processing apparatus is provided. The audio processing apparatus includes:
a receiving unit, configured to receive an audio synthesis request, the audio synthesis request including to-be-synthesized audio data;
a first generation unit, configured to generate chunk hidden vectors of a plurality of chunks based on the to-be-synthesized audio data, each chunk including a plurality of consecutive audio frames in target audio, the target audio being audio synthesized based on the audio synthesis request, the plurality of chunks being sorted based on a sequence of audio frames included in the chunks, and audio frames of two adjacent chunks being consecutive; and
a second generation unit, configured to input the plurality of chunk hidden vectors into an audio generation network based on a sequence of the chunks, the audio generation network being configured to perform the following processing: generating, for each chunk in the target audio, an audio frame of the chunk based on a chunk hidden vector of the chunk and a chunk hidden vector of a preceding chunk of the chunk while playing the preceding chunk of the chunk, and adding the generated audio frame to a target playing queue for playing.

According to an aspect of the embodiments of this disclosure, an electronic device is provided. The electronic device includes a memory and a processor, the memory has a computer program stored therein, and the processor, when executing the computer program, implements the foregoing audio processing method.

According to an aspect of the embodiments of this disclosure, a computer-readable storage medium is provided. The storage medium has a computer program stored therein, and the computer program, when executed by a processor, implements the foregoing audio processing method.

According to an aspect of the embodiments of this disclosure, a computer program product is provided. The computer program product includes a computer program, and the computer program, when read and executed by a processor of a computer device, causing the computer device to perform the foregoing audio processing method.

In the embodiments of this disclosure, after an audio synthesis request is received, instead of generating an audio frame hidden vector of entire target audio based on entire to-be-synthesized audio data and then generating, by using an audio generation network, the target audio based on the audio frame hidden vector of the entire target audio in the related technology, the target audio is considered to be divided into chunks, where each chunk corresponds to one or more audio frames in the target audio. Then, a chunk hidden vector of each chunk is generated based on the to-be-synthesized audio data. When the target audio is generated by using the audio generation network, for each chunk, an audio frame of the chunk is generated based on the chunk hidden vector of the chunk and a chunk hidden vector of a preceding chunk of the chunk, and the generated audio frame is added to the target playing queue for playing. A process of adding the audio frame of the chunk to the target playing queue is performed simultaneously with a process of playing an audio frame of the preceding chunk of the chunk. In this way, a user does not have to wait for the entire target audio to be synthesized before listening to the target audio being played. Instead, provided that a chunk is synthesized, an audio frame of the chunk can be played; and while the audio frame is played, an audio frame of a next chunk is being generated. A manner of generating an audio frame of a chunk while playing a preceding audio frame improves response efficiency of audio synthesis. In addition, the audio frame of the chunk is generated based on the chunk hidden vector of the chunk and the chunk hidden vector of the preceding chunk of the chunk. This ensures that when the target audio is generated, a feature of each chunk is not considered in isolation, but correlations and mutual influences between the plurality of chunks are considered, thereby improving audio synthesis accuracy.

Other features and advantages of the embodiments of this disclosure will be described in the following specification, and some will become apparent from the specification, or may be learned from implementation of the embodiments of this disclosure. The objectives and other advantages of the embodiments of this disclosure may be implemented and obtained by using structures particularly pointed out in the specification, claims, and accompanying drawings.

### BRIEF DESCRIPTION OF THE DRAWINGS

The accompanying drawings are configured to provide further understanding of the technical solutions in the embodiments of this disclosure and constitute a part of this specification. The accompanying drawings are configured to explain the technical solutions in the embodiments of this disclosure in combination with the embodiments of this disclosure, and do not constitute a limitation to the technical solutions in the embodiments of this disclosure.
FIG. 1 is an architectural diagram of a system to which an audio processing method according to an embodiment of this disclosure is applied.
FIG. 2A to FIG. 2D are schematic diagrams of interfaces when an embodiment of this disclosure is applied in a song generation scenario.
FIG. 3 is a flowchart of an audio processing method according to an embodiment of this disclosure.
FIG. 4 is a schematic diagram of chunking a plurality of audio frames in target audio according to an embodiment of this disclosure.
FIG. 5 is a flowchart of operation 320 according to an embodiment of this disclosure.
FIG. 6 is a schematic diagram of generating chunk hidden vectors of a plurality of chunks based on to-be-synthesized audio data according to an embodiment of this disclosure.
FIG. 7 is another flowchart of operation 320 according to an embodiment of this disclosure.
FIG. 8 is a flowchart of operation 730 according to an embodiment of this disclosure.
FIG. 9 is a flowchart of operation 820 according to an embodiment of this disclosure.
FIG. 10 is a flowchart of operation 930 according to an embodiment of this disclosure.
FIG. 11 is another flowchart of operation 930 according to an embodiment of this disclosure.
FIG. 12 is a schematic diagram of obtaining a chunk hidden vector based on a preceding chunk hidden vector and an intermediate hidden vector according to an embodiment of this disclosure.
FIG. 13A to FIG. 13C are schematic diagrams of generating, by an audio generation network, audio frames included in chunks one by one and adding the audio frames to a target playing queue according to an embodiment of this disclosure.
FIG. 14A to FIG. 14D are schematic diagrams of generating, by a second neural network and an audio generation network, audio frames included in chunks one by one and adding the audio frames to a target playing queue according to an embodiment of this disclosure.
FIG. 15 is a flowchart of operation 330 according to an embodiment of this disclosure.
FIG. 16 is a flowchart of operation 1510 according to an embodiment of this disclosure.
FIG. 17 is a schematic diagram of padding a chunk hidden vector of a chunk with a chunk hidden vector of a preceding chunk of the chunk according to an embodiment of this disclosure.
FIG. 18 is a flowchart of operation 1510 according to an embodiment of this disclosure.
FIG. 19 is a flowchart of operation 1830 according to an embodiment of this disclosure.
FIG. 20 is a schematic diagram of performing convolution in one layer of an audio generation network according to an embodiment of this disclosure.
FIG. 21 is a flowchart of training a first neural network, a second neural network, and an audio generation network according to an embodiment of this disclosure.
FIG. 22 is a flowchart of training a third neural network, a fourth neural network, and an audio generation network according to an embodiment of this disclosure.
FIG. 23 is a flowchart of implementation details of an audio processing method according to an embodiment of this disclosure.
FIG. 24 is a block diagram of an audio processing apparatus according to an embodiment of this disclosure.
FIG. 25 is a structural diagram of a terminal performing the audio processing method shown in FIG. 3 according to an embodiment of this disclosure.
FIG. 26 is a structural diagram of a server performing the audio processing method shown in FIG. 3 according to an embodiment of this disclosure.

### DESCRIPTION OF EMBODIMENTS

To make the objectives, technical solutions, and advantages of the embodiments of this disclosure clearer, the following further describes the embodiments of this disclosure in detail with reference to the accompanying drawings and the embodiments. The specific embodiments described herein are only configured to describe the embodiments of this disclosure, instead of limiting the embodiments of this disclosure.

Before the embodiments of this disclosure are further described in detail, nouns and terms involved in the embodiments of this disclosure are described. The nouns and terms involved in the embodiments of this disclosure are applicable to the following explanations:

A deep neural network (DNN) is a multilayer unsupervised neural network. The deep neural network uses an output feature of a previous layer as an input of a next layer for feature learning. Through layer-by-layer feature mapping, a feature of an existing space sample is mapped to another feature space, to learn better feature expression of an existing input. The deep neural network has a plurality of feature transformations with non-linear mappings, and can fit highly complex functions.

A diffusion model is a generative model based on latent diffusion, and may be applied to sound generation and the like. A core idea of the diffusion model is to consider a data generation process as a process in which an ordered state gradually transitions to a disordered state, followed by a reverse process in which the disordered state is restored to the ordered state, thereby generating a new data sample. A forward diffusion process starts from a data point, and then noise is gradually increased through a series of operations, so that data points gradually become disordered. In a reverse diffusion process, noise is gradually removed through a series of inverse operations, so that the disordered state is restored to the ordered state, thereby generating a new data point.

A variational auto-encoder is a deep generative model that maps input data to a latent space through an encoder and outputs a mean vector and a variance vector. The vectors jointly describe a Gaussian distribution. A function of the encoder is to learn a probability distribution of the data, so that points sampled from the latent space can generate new data similar to original data.

Self-attention is a mechanism widely used in a sequence model. The mechanism allows the model to consider information of other elements in a sequence when processing each element in the sequence. A core idea of the self-attention mechanism is to calculate attention weights of each element in the sequence to all other elements, and then perform a weighted summation on the information of other elements based on the weights. For each element in the sequence, the model generates three vectors: query (Q), key (K), and value (V). These vectors are usually obtained through different linear transformations. A key feature of the self-attention mechanism is that the self-attention mechanism can obtain a long-distance dependency relationship within the sequence. In addition, the self-attention mechanism features high calculation efficiency because of a parallelization characteristic.

Mel-frequency cepstral coefficient: Mel filter bank analysis is performed on a signal, and then a cepstral coefficient is calculated, so that a frequency-domain feature of the signal is extracted. Mel filter bank analysis is a non-linear transformation method of simulating human-ear frequency perception. A linear spectrum is converted into a non-linear spectrum based on Mel scale. The Mel scale is a frequency unit of a logarithmic scale, and approximates a perceptual manner of a human auditory system. Cepstral analysis is a method of decomposing a signal into a slowly changing envelope and a rapidly changing detail (for example, a periodic oscillation) of the signal.

### Description of a system architecture and scenario to which an embodiment of this disclosure is applied

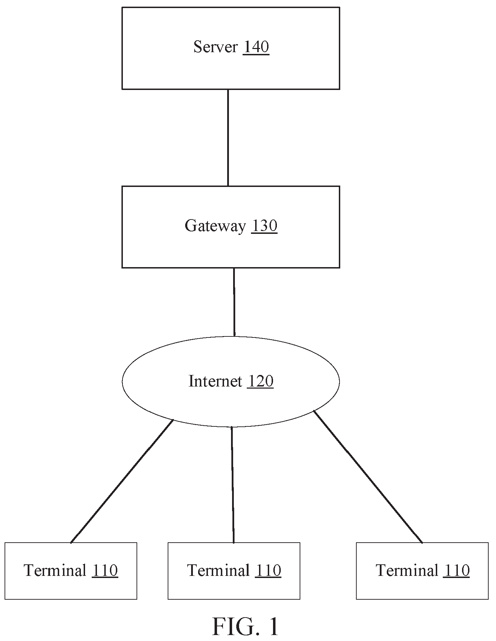

FIG. 1 is an architectural diagram of a system to which an audio processing method according to an embodiment of this disclosure is applied. The system includes a terminal 110, an Internet 120, a gateway 130, and a server 140.

The server 140 is a computer system that can provide an audio synthesis service for the terminal 110. Compared with the terminal 110, the server 140 has higher requirements in aspects such as stability, security, and performance. The server 140 may be a high-performance computer, a cluster of a plurality of high-performance computers, a part (for example, a virtual machine) of a high-performance computer, a combination of parts (for example, virtual machines) of a plurality of high-performance computers, or the like on a network platform. The server 140 may also communicate with the Internet 120 in a wired or wireless manner to exchange data.

The gateway 130 is also referred to as an inter-network connector or a protocol converter. The gateway 130 implements network interconnection on a transport layer, and is a computer system or device that functions as a converter. The gateway 130 is a translator between two systems that use different communication protocols, data formats, or languages, or even completely different architectures. In addition, the gateway 130 may also provide filtering and security functions. A message transmitted by the terminal 110 to the server 140 needs to be transmitted to the corresponding server 140 through the gateway 130. A message transmitted by the server 140 to the terminal 110 also needs to be transmitted to the corresponding terminal 110 through the gateway 130.

The terminal 110 is a device used by an object to view synthesized audio. The terminal 110 includes various forms such as a desktop computer, a laptop computer, a personal digital assistant (PDA), a mobile phone, an in-vehicle terminal, a home theater terminal, and a dedicated terminal. In addition, the terminal 110 may be a single device, or may be a set including a plurality of devices. For example, a plurality of devices are connected through a local area network, and share a display device to work collaboratively, thereby forming a terminal. The terminal 110 may also communicate with the Internet 120 in a wired or wireless manner to exchange data.

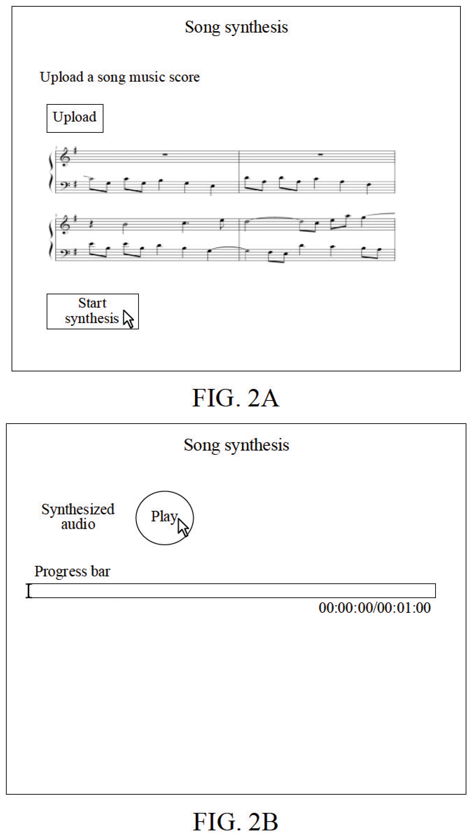

This embodiment of this disclosure may be applied in a plurality of scenarios, for example, a song synthesis scenario shown in FIG. 2A to FIG. 2D.

As shown in FIG. 2A, an object may upload a music score of a song for song synthesis. After the music score of the song is uploaded, a song synthesis request is submitted by clicking "start synthesis", so that in the audio processing method in this embodiment of this disclosure, song synthesis is performed based on the music score of the song.

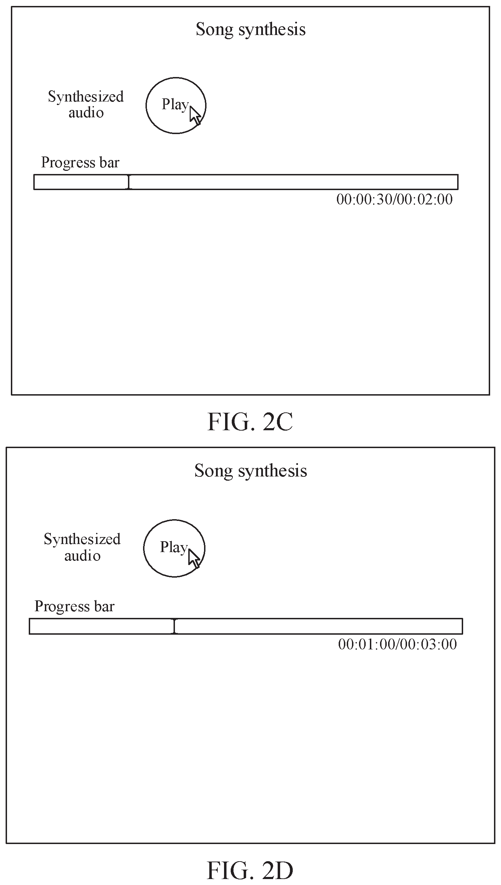

A song synthesis result returned to the object is shown in FIG. 2B. First, first synthesized song audio with duration of one minute is returned to the object. The object can start to play the audio. As shown in FIG. 2C, when the audio is played to a 30-second mark, second song audio with duration of one minute is synthesized and spliced with the first song audio, to form two-minute song audio. As shown in FIG. 2D, when the audio is played to a 30-second mark, third song audio with duration of one minute is synthesized and spliced with the previous song audio, to form three-minute song audio. In the process, the audio is continuously played.

It is assumed that it takes 30 seconds to generate one-minute song audio each time. If duration of song audio is 3 minutes, the object needs to wait 1 minute and 30 seconds after submitting the song synthesis request for the complete song audio to be generated and returned. However, in FIG. 2B to FIG. 2D, the song audio is synthesized in three segments. After submitting the song synthesis request, the object can start to play the audio only after waiting 30 seconds for the first one-minute song audio to be synthesized, and remaining two-minute song audio can be synthesized in an audio play process. It can be learned that in the audio processing method in this embodiment of this disclosure, waiting time of the object after submitting the song synthesis request is greatly reduced, thereby improving response efficiency of the song synthesis request while maintaining song smoothness.

### General description of the embodiments of this disclosure

According to an embodiment of this disclosure, an audio processing method is provided.

The audio processing method may be a process of performing audio synthesis based on an audio synthesis request of an object. In the related technology, to ensure smoothness of synthesized audio, after complete audio is synthesized, the synthesized audio needs to be returned to the object. This leads to low response efficiency of the audio synthesis request of the object. In view of this, an embodiment of this disclosure provides an audio processing method, to improve response efficiency of an audio synthesis request without sacrificing smoothness of synthesized audio.

The audio processing method in this embodiment of this disclosure may be performed by a terminal 110 alone, or may be performed by a server 140 alone, or may be partially performed in the terminal 110 and partially performed in the server 140.

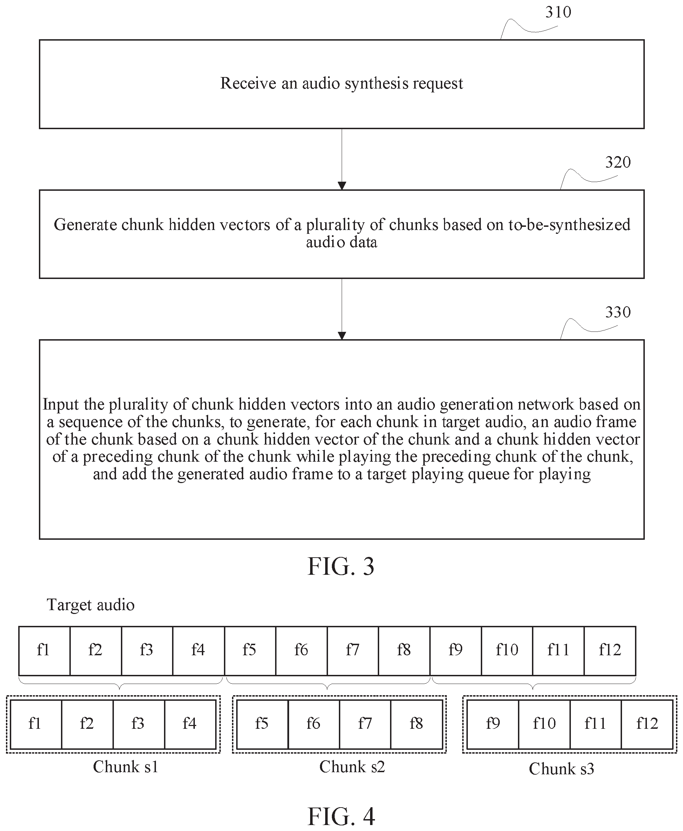

As shown in FIG. 3, according to an embodiment of this disclosure, the audio processing method includes the following operations:
Operation 310: Receive an audio synthesis request.
Operation 320: Generate chunk hidden vectors of a plurality of chunks based on to-be-synthesized audio data.
Operation 330: Input the plurality of chunk hidden vectors into an audio generation network based on a sequence of the chunks, to generate, for each chunk in target audio, an audio frame of the chunk based on a chunk hidden vector of the chunk and a chunk hidden vector of a preceding chunk of the chunk while playing the preceding chunk of the chunk, and add the generated audio frame to a target playing queue for playing.

The following describes operation 310 to operation 330 in detail.

### Detailed description of operation 310

In operation 310, the audio synthesis request is received.

The audio synthesis request may be transmitted by a terminal device held by an object, and is configured for synthesizing desired audio. The audio synthesis request includes the to-be-synthesized audio data (i.e., source/input audio data to be synthesized). Content included in the to-be-synthesized audio data varies based on different audio types. For example, when the object intends to synthesize song audio, the to-be-synthesized audio data may include music score data corresponding to a song, and the like. When the object intends to synthesize speech audio, the to-be-synthesized audio data may include text content of a speech, voice data of a speaker, and the like.

The to-be-synthesized audio data may be manufactured by the object or may be obtained from an open-source audio database, for example, the music score data is obtained from a song audio database.

### Detailed description of operation 320

In operation 320, the chunk hidden vectors of the plurality of chunks are generated based on the to-be-synthesized audio data.

Each chunk includes a plurality of consecutive audio frames in the target audio, the target audio is audio synthesized based on the audio synthesis request, the plurality of chunks are sorted based on a sequence of audio frames included in the chunks, and audio frames of two adjacent chunks are consecutive. For example, as shown in FIG. 4, target audio includes 12 audio frames in total. When the target audio is chunked based on a chunk length of 4 audio frames, three chunks, that is, a chunk s1, a chunk s2, and a chunk s3, are obtained. The chunk s1 includes consecutive audio frames f1 to f4, the chunk s2 includes consecutive audio frames f5 to f8, and the chunk s3 includes consecutive audio frames f9 to f12. The chunks are sorted based on a sequence of audio frames in the chunks. Therefore, a result of sorting the plurality of chunks based on a sequence of the audio frame f1 to the audio frame f12 is: the chunk s1, the chunk s2, and the chunk s3.

A chunk hidden vector corresponding to each chunk may be generated based on the to-be-synthesized audio data. The chunk hidden vector may be a latent representation obtained by mapping a feature of an audio frame in the chunk to a latent space. The latent space is a high-dimensional and abstract vector space. A space dimension of the latent space is usually smaller than that of original data space. The latent space is configured to obtain a main feature and a result of data while ignoring irrelevant details in the data. The latent representation refers to a point or a vector of the data in the latent space. The latent representation can represent an intrinsic feature of the data while removing noise and other unnecessary information. Therefore, the chunk hidden vector is a result of obtaining an important feature of the audio frame in the chunk and removing noise and an unnecessary feature.

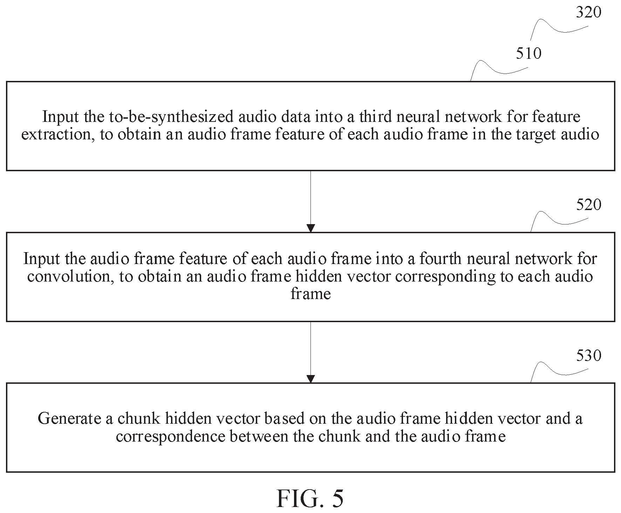

In an implementation, as shown in FIG. 5, the generating chunk hidden vectors of a plurality of chunks based on to-be-synthesized audio data may be implemented in the following manner:
Operation 510: Input the to-be-synthesized audio data into a third neural network for feature extraction, to obtain an audio frame feature of each audio frame in the target audio.
Operation 520: Input the audio frame feature of each audio frame into a fourth neural network for convolution, to obtain an audio frame hidden vector corresponding to each audio frame.
Operation 530: Generate a chunk hidden vector based on the audio frame hidden vector and a correspondence between a chunk and the audio frame.

The third neural network may extract the audio frame feature of each audio frame in the target audio based on the to-be-synthesized audio data. The third neural network may include a duration control module, configured to first determine an audio frame length of the target audio based on the to-be-synthesized audio data, that is, a total quantity of audio frames in the target audio. After the audio frame length is determined, the audio frame feature of each audio frame may be extracted based on the to-be-synthesized audio data.

After the audio frame feature of each audio frame is obtained by using the third neural network, the audio frame feature may be inputted into the fourth neural network for convolution, to obtain the audio frame hidden vector corresponding to each audio frame. The fourth neural network performs convolution based on audio frame features corresponding to all audio frames in the target audio, to obtain the audio frame feature corresponding to each audio frame.

The fourth neural network may be a variational auto-encoder, and may obtain audio frame hidden vectors corresponding to the plurality of audio frames based on the audio frame features corresponding to the plurality of audio frames.

Alternatively, the fourth neural network may be a diffusion model, and may progressively perform, based on the audio frame features corresponding to the plurality of audio frames, noise reduction on an initial hidden feature filled with Gaussian noise, to obtain the audio frame features corresponding to the plurality of audio frames. The initial hidden feature is a pre-generated feature vector in which no feature or attribute is observed. Based on the audio frame features of the plurality of audio frames, noise reduction is performed on the initial hidden feature by using the fourth neural network, so that the initial hidden feature can be integrated into the audio frame features, to obtain the audio frame hidden vectors corresponding to the plurality of audio frames.

The correspondence between the chunk and the audio frame refers to a specific audio frame or specific audio frames included in each chunk. The correspondence between the chunk and the audio frame may be predetermined. For example, a chunk s1 includes an audio frame f4 and an audio frame f5, and a chunk s2 includes an audio frame f1, an audio frame f2, and an audio frame f3. The correspondence between the chunk and the audio frame may alternatively be determined based on a preset chunk length. For example, the preset chunk length is 4. In other words, each chunk includes four audio frames. In this case, starting from a first audio frame in the plurality of audio frames, each four audio frames are divided as a chunk.

Based on the correspondence between the chunk and the audio frame, an audio frame hidden vector corresponding to an audio frame in a chunk is spliced into a chunk hidden vector corresponding to the chunk.

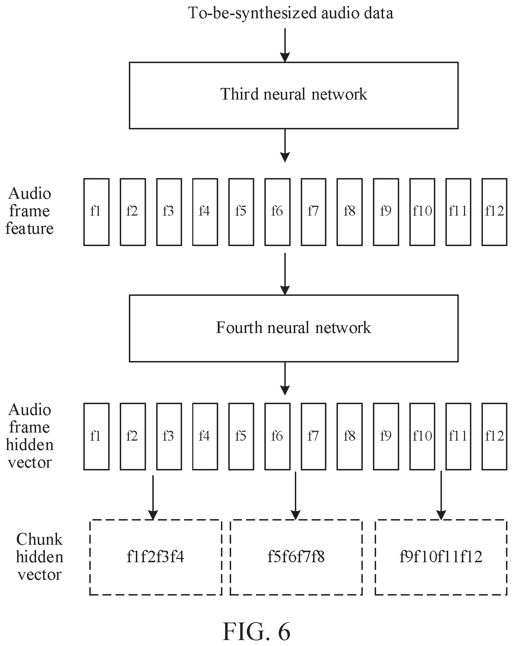

A specific process may be represented as FIG. 6. First, the to-be-synthesized audio data is inputted into the third neural network, to obtain audio frame features of an audio frame f1 to an audio frame f12. The audio frame features of the audio frame f1 to the audio frame f12 are inputted into the fourth neural network, to obtain audio frame hidden vectors of the audio frame f1 to the audio frame f12. The correspondence between the chunk and the audio frame is that every four consecutive audio frames are used as a chunk. Therefore, the audio frame f1 to the audio frame f4 may form a chunk, the audio frame f5 to the audio frame f8 may form a chunk, and the audio frame f9 to the audio frame f12 may form a chunk. The audio frame hidden vector corresponding to the audio frame in each chunk forms the chunk hidden vector corresponding to the chunk.

In the implementation of operation 510 to operation 530, the fourth neural network is used to calculate hidden vectors for the audio frame features of all audio frames, ensuring accuracy of obtaining the audio frame features. In other words, calculating the hidden vectors based on global audio frame features ensures audio synthesis accuracy based on the audio frame features. Therefore, in the implementation of operation 510 to operation 530, audio synthesis accuracy can be improved while response efficiency of audio synthesis processing is improved.

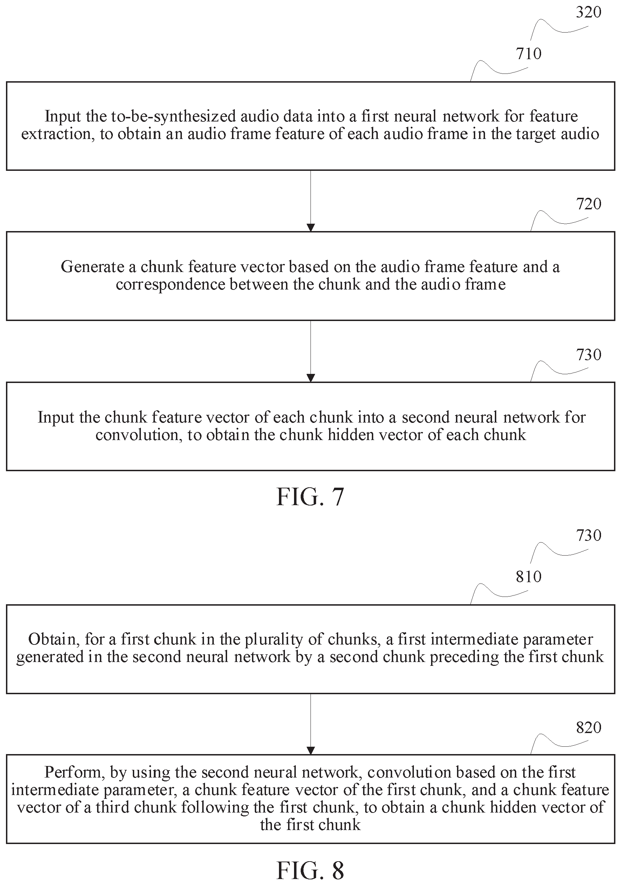

In another implementation, as shown in FIG. 7, the generating chunk hidden vectors of a plurality of chunks based on to-be-synthesized audio data may be implemented in the following manner:
Operation 710: Input the to-be-synthesized audio data into a first neural network for feature extraction, to obtain an audio frame feature of each audio frame in the target audio.
Operation 720: Generate a chunk feature vector based on the audio frame feature and a correspondence between the chunk and the audio frame.
Operation 730: Input the chunk feature vector of each chunk into a second neural network for convolution, to obtain the chunk hidden vector of each chunk.

The first neural network in operation 710 is the same as the third neural network in operation 510, and processes of generating the audio frame feature of each audio frame in the target audio are also the same. To reduce space, details are not described herein again.

A process of generating the chunk feature vector based on the audio frame feature and the correspondence between the chunk and the audio frame in operation 720 is similar to a process of generating the chunk hidden vector based on the audio frame hidden vector and the correspondence between the chunk and the audio frame in operation 530. In other words, an audio frame feature corresponding to an audio frame in a chunk forms a chunk feature vector corresponding to the chunk. For example, one chunk includes an audio frame f1 to an audio frame f4, and audio frame features corresponding to the audio frame f1 to the audio frame f4 form a chunk feature vector corresponding to the chunk.

In operation 730, the chunk feature vector of each chunk is inputted into the second neural network for convolution, to obtain the chunk hidden vector of each chunk.

In an implementation, as shown in FIG. 8, the inputting the chunk feature vector of each chunk into a second neural network for convolution, to obtain a chunk hidden vector of each chunk may be implemented in the following manner:
Operation 810: Obtain, for a first chunk in the plurality of chunks, a first intermediate parameter generated in the second neural network by a second chunk preceding the first chunk.
Operation 820: Perform, by using the second neural network, convolution based on the first intermediate parameter, a chunk feature vector of the first chunk, and a chunk feature vector of a third chunk following the first chunk, to obtain a chunk hidden vector of the first chunk.

The first chunk may be any one in the plurality of chunks. When the second neural network generates the chunk hidden vector corresponding to the first chunk, the first intermediate parameter generated in the second neural network by the second chunk preceding the first chunk is obtained. The chunk hidden vector of the first chunk is obtained based on the first intermediate parameter, the chunk feature vector of the first chunk, and the chunk feature vector of the third chunk following the first chunk.

If the first chunk is a 1^{st} chunk in the plurality of chunks, the chunk hidden vector of the first chunk may be directly obtained based on the chunk feature vector of the first chunk and the chunk feature vector of the third chunk following the first chunk.

In contrast to the embodiment of operation 510 to operation 530 in which the fourth neural network performs convolution based on audio frame features corresponding to all audio frames in the target audio, the second neural network performs convolution based on an audio frame feature corresponding to an audio frame in each chunk.

Because consecutive audio frames are correlated, if the chunk hidden vector corresponding to the first chunk is generated based on only an audio frame included in the first chunk, the audio frame in the first chunk cannot be correlated with an audio frame in another chunk, leading to low accuracy of generating the chunk hidden vector. Therefore, when the chunk hidden vector of the first chunk is generated, the third chunk following the first chunk may be considered simultaneously, to generate the chunk hidden vector corresponding to the first chunk based on a correlation between the audio frame in the first chunk and another chunk, which helps improve accuracy of generating the chunk hidden vector.

The first intermediate parameter is a parameter and a value generated by the second neural network when generating a chunk hidden vector for the second chunk preceding the first chunk, for example, a latent feature generated by the second neural network when generating the chunk hidden vector for the second chunk preceding the first chunk, which is configured for obtaining a key feature in the chunk feature vector; chunk semantic association information of the second chunk preceding the first chunk; and the like. For example, there are a chunk s1 and a chunk s2 preceding the first chunk, and the first intermediate parameter may include a key feature of the chunk s1, a key feature of the chunk s2, chunk semantic association information between the chunk s1 and the chunk s2, and the like.

The first intermediate parameter is the parameter and the value generated by the second neural network when generating the chunk hidden vector corresponding to the second chunk preceding the first chunk. Therefore, the first intermediate parameter can fully express key information in a process of mapping a chunk feature vector of the second chunk preceding the first chunk to a latent space. Therefore, accuracy of generating the chunk hidden vector of the first chunk can be improved by using the first intermediate parameter. A chunk hidden vector of the third chunk following the first chunk is generated after the chunk hidden vector corresponding to the first chunk is generated. Therefore, the chunk hidden vector of the third chunk following the first chunk may be generated based on the first intermediate parameter corresponding to the first chunk. When the third chunk following the first chunk is considered, the chunk feature vector corresponding to the third chunk following the first chunk can be directly used.

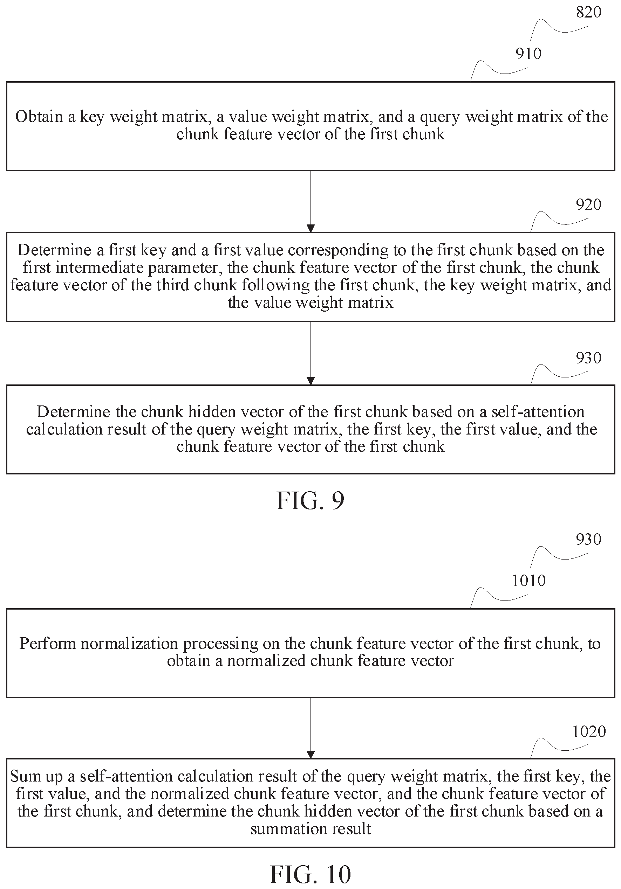

In an implementation, as shown in FIG. 9, the performing, by using the second neural network, convolution based on the first intermediate parameter, a chunk feature vector of the first chunk, and a chunk feature vector of a third chunk following the first chunk, to obtain a chunk hidden vector of the first chunk may be implemented in the following manner:
Operation 910: Obtain a key weight matrix, a value weight matrix, and a query weight matrix of the chunk feature vector of the first chunk.
Operation 920: Determine a first key and a first value corresponding to the first chunk based on the first intermediate parameter, the chunk feature vector of the first chunk, the chunk feature vector of the third chunk following the first chunk, the key weight matrix, and the value weight matrix.
Operation 930: Determine the chunk hidden vector of the first chunk based on a self-attention calculation result of the query weight matrix, the first key, the first value, and the chunk feature vector of the first chunk.

The key weight matrix is configured for converting a chunk feature vector into a key vector. Dot product calculation is performed on the key vector and a query vector, to determine an attention score. The value weight matrix is configured for converting the chunk feature vector into a value vector, where the value vector includes actual information of the feature vector. The query weight matrix is configured for converting the feature vector into a query vector. The query vector represents a query representation of the chunk feature vector during attention calculation. The key weight matrix, the value weight matrix, and the query weight matrix may all be obtained through iterative training based on an initial quantity.

In operation 920, the first key and the first value corresponding to the first chunk are determined based on the first intermediate parameter, the chunk feature vector of the first chunk, the chunk feature vector of the third chunk following the first chunk, the key weight matrix, and the value weight matrix. In addition to semantically related information such as a latent feature and chunk semantic association information of the second chunk preceding the first chunk, the first intermediate parameter may further include a key weight matrix and a value weight matrix corresponding to a chunk feature vector of a preceding chunk of the first chunk.

Because multi-layer calculation needs to be performed in the second neural network, a first key and a first value corresponding to the first chunk in each layer can be determined through computation at the layer.

A process of determining the first key corresponding to the first chunk based on the first intermediate parameter, the chunk feature vector of the first chunk, the chunk feature vector of the third chunk following the first chunk, and the key weight matrix may be expressed as Formula 1: ${K}_{i}^{n} = \left[{W}_{k}{M}_{i}^{n},{K}_{L , i}^{n},{W}_{k}{C}_{i}^{n},{W}_{k}{R}_{i}^{n}\right]$ (Formula 1).

In Formula 1, ${K}_{i}^{n}$ represents the first key corresponding to the first chunk i at an n^{th} layer of the second neural network; i represents an identifier of the first chunk in the plurality of chunks; n represents a quantity of neural network layers of the second neural network that calculates the chunk hidden vector for the chunk feature vector of the first chunk; Wₖ represents the key weight matrix; ${M}_{i}^{n}$ is a joint representation vector of the first intermediate parameter; ${K}_{L , i}^{n}$ represents the key weight matrix corresponding to the chunk feature vector of the preceding chunk of the first chunk; ${C}_{i}^{n}$ represents the chunk feature vector of the first chunk; and ${R}_{i}^{n}$ represents the chunk feature vector of the third chunk following the first chunk.

The joint representation vector of the first intermediate parameter is multiplied by the key weight matrix of the first chunk, to obtain a first product; and the key weight matrix of the first chunk is multiplied by the chunk feature vector, to obtain a second product; and the key weight matrix of the first chunk is multiplied by the chunk feature vector of the third chunk following the first chunk, to obtain a third product. The first product, the key weight matrix corresponding to the chunk feature vector representing the preceding chunk of the first chunk, the second product, and the third product are spliced to obtain the first key corresponding to the first chunk.

A process of determining the first value corresponding to the first chunk based on the first intermediate parameter, the chunk feature vector of the first chunk, the chunk feature vector of the third chunk following the first chunk, and the value weight matrix may be expressed as Formula 2: ${V}_{i}^{n} = \left[{W}_{v}{M}_{i}^{n},{V}_{L , i}^{n},{W}_{v}{C}_{i}^{n},{W}_{v}{R}_{i}^{n}\right]$ (Formula 2).

In Formula 2, ${V}_{i}^{n}$ represents the first value corresponding to the first chunk i at the n^{th} layer of the second neural network; Wᵥ represents the value weight matrix; and ${V}_{L , i}^{n}$ represents the value weight matrix corresponding to the chunk feature vector of the preceding chunk of the first chunk. Other parameters are the same as those in Formula 1, and details are not described herein again.

The joint representation vector of the first intermediate parameter is multiplied by the value weight matrix of the first chunk, to obtain a fourth product; the value weight matrix of the first chunk is multiplied by the chunk feature vector, to obtain a fifth product; and the value weight matrix of the first chunk is multiplied by the chunk feature vector of the third chunk following the first chunk, to obtain a sixth product. The fourth product, the value weight matrix corresponding to the chunk feature vector representing the preceding chunk of the first chunk, the fifth product, and the sixth product are spliced to obtain the first value corresponding to the first chunk.

In operation 930, the chunk hidden vector of the first chunk is determined based on the self-attention calculation result of the query weight matrix, the first key, the first value, and the chunk feature vector of the first chunk.

The chunk hidden vector of the first chunk may be determined by using a feed-forward network (FFN). The FFN is configured to further process and extract a feature representation after a self-attention mechanism.

After the first key and the first value are obtained at the n^{th} layer of the second neural network, a self-attention result of the n^{th} layer can be calculated, and a hidden vector of the n^{th} layer is determined by using the FFN. The hidden vector of the n^{th} layer is transferred to a next layer as a chunk feature vector of the next layer. The foregoing process continues until the last layer of the second neural network outputs the chunk hidden vector of the first chunk.

Therefore, a process of determining, at the n^{th} layer of the second neural network, the hidden vector of the n^{th} layer, that is, the chunk feature vector of an (n+1)^{th} layer by using the FFN may be expressed as Formula 3: ${C}_{i}^{n + 1} = FNN \left({h}_{C , i}^{n}\right)$ (Formula 3).

In Formula 3, ${h}_{C , i}^{n}$ represents a self-attention calculation result of the query weight matrix, the first key, the first value, and the chunk feature vector of the first chunk at the n^{th} layer.

At the (n+1)^{th} layer, the hidden vector of the first chunk at the n^{th} layer needs to be used as the chunk feature vector of the first chunk at the (n+1)^{th} layer. In addition, the hidden vector of the first chunk at the n^{th} layer needs to be used as the chunk feature vector of the third chunk following the first chunk at the (n+1)^{th} layer. Therefore, the chunk feature vector of the third chunk following the first chunk further needs to be iterated. A process of iterating, by using the FFN, the chunk feature vector of the third chunk following the first chunk may be expressed as Formula 4: ${R}_{i}^{n + 1} = FNN \left({h}_{R , i}^{n}\right)$ (Formula 4).

In Formula 4, ${h}_{R , i}^{n}$ represents a self-attention calculation result of the query weight matrix, the first key, the first value, and the chunk feature vector of the third chunk following the first chunk at the n^{th} layer.

In an implementation, as shown in FIG. 10, the determining the chunk hidden vector of the first chunk based on a self-attention calculation result of the query weight matrix, the first key, the first value, and the chunk feature vector of the first chunk may be implemented in the following manner:
Operation 1010: Perform normalization processing on the chunk feature vector of the first chunk, to obtain a normalized chunk feature vector.
Operation 1020: Sum up a self-attention calculation result of the query weight matrix, the first key, the first value, and the normalized chunk feature vector, and the chunk feature vector of the first chunk, and determine the chunk hidden vector of the first chunk based on a summation result.

Self-attention calculation is performed on the chunk feature vector after normalization processing is performed, to determine the chunk hidden vector, which helps reduce perturbation of data to model training and improve a model generalization capability. A process of calculating the chunk hidden vector further needs a chunk feature vector of a third chunk following the first chunk. Therefore, normalization processing may also be performed on the chunk feature vector of the third chunk following the first chunk.

A process of chunk feature vectors of the first chunk and the third chunk following the first chunk may be expressed as Formula 5: ${\hat{C}}_{i}^{n} , {\hat{R}}_{i}^{n} = LayerNorm \left(\left[{C}_{i}^{n}, {R}_{i}^{n}\right]\right)$ (Formula 5).

In Formula 5, ${\hat{C}}_{i}^{n}$ may represent the normalized chunk feature vector obtained by performing normalization processing on the chunk feature vector of the first chunk; ${\hat{R}}_{i}^{n}$ may represent a normalized chunk feature vector by performing normalization processing on the chunk feature vector of the third chunk following the first chunk; and LayerNorm represents a normalization processing process.

A process of summing up the self-attention calculation result of the query weight matrix, the first key, the first value, and the normalized chunk feature vector, and the chunk feature vector of the first chunk may be expressed as Formula 6: ${h}_{C , i}^{n} = Attn \left({W}_{q}{\hat{C}}_{i}^{n},{K}_{i}^{n},{V}_{i}^{n}\right) + {C}_{i}^{n}$ (Formula 6).

In Formula 6, W_{q} represents the query weight matrix; and $Attn \left({W}_{q}{\hat{C}}_{i}^{n},{K}_{i}^{n},{V}_{i}^{n}\right)$ represents a process of self-attention processing. The query weight matrix is first multiplied by the normalized chunk feature vector corresponding to the first chunk, and then self-attention calculation is performed based on the product, the first key, and the first value.

Similarly, a self-attention calculation result of the query weight matrix, the first key, the first value, and the chunk feature vector of the third chunk following the first chunk may be expressed as Formula 7: ${h}_{R , i}^{n} = Attn \left({W}_{q}{\hat{R}}_{i}^{n},{K}_{i}^{n},{V}_{i}^{n}\right) + {R}_{i}^{n}$ (Formula 7).

A first intermediate parameter may include not only a parameter and a value generated by a second chunk preceding the first chunk when the second chunk preceding the first chunk generates a chunk hidden vector, but also a parameter and a value generated by a preceding layer of a current layer when the first chunk is calculated at the current layer of a second neural network.

Therefore, the first intermediate parameter may also be iterated. A parameter and a value generated at an n^{th} layer of the second neural network may be expressed as Formula 8: ${m}_{i}^{n} = Attn \left({W}_{q}{s}_{i}^{n},{K}_{i}^{n},{V}_{i}^{n}\right)$ (Formula 8).

In Formula 8, ${m}_{i}^{n}$ represents the parameter and the value generated at the n^{th} layer of the second neural network, and ${s}_{i}^{n}$ represents an average value of the chunk feature vector ${C}_{i}^{n}$ of the first chunk.

The parameter and the value generated at the n^{th} layer of the second neural network are added to the first intermediate parameter, to implement iteration of the first intermediate parameter for calculation of a chunk hidden vector at an (n+1)^{th} layer.

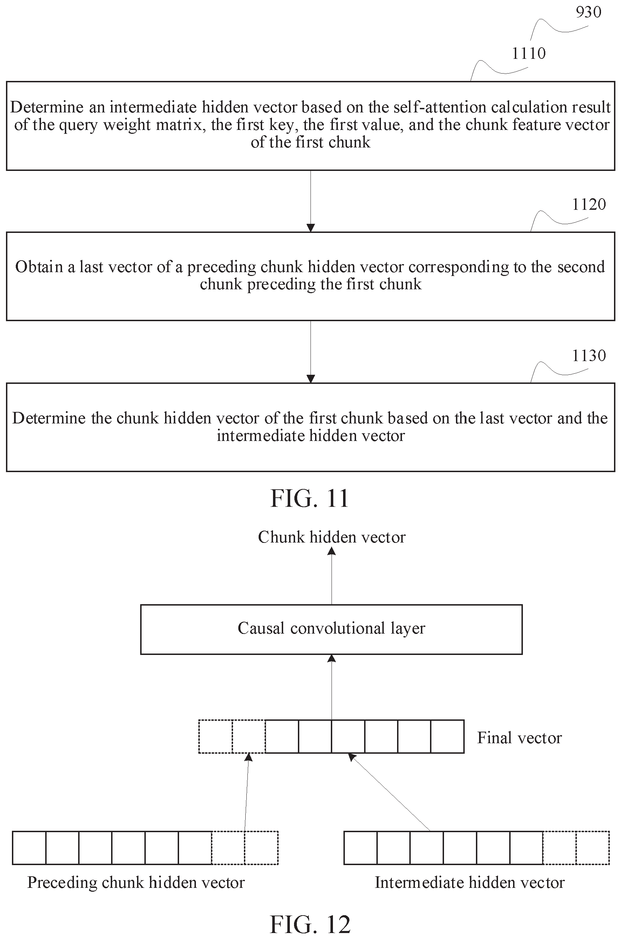

In another implementation, as shown in FIG. 11, the determining the chunk hidden vector of the first chunk based on a self-attention calculation result of the query weight matrix, the first key, the first value, and the chunk feature vector of the first chunk may be implemented in the following manner:
Operation 1110: Determine an intermediate hidden vector based on the self-attention calculation result of the query weight matrix, the first key, the first value, and the chunk feature vector of the first chunk.
Operation 1120: Obtain a last vector of a preceding chunk hidden vector corresponding to a second chunk preceding the first chunk.
Operation 1130: Determine the chunk hidden vector of the first chunk based on the last vector and the intermediate hidden vector.

A process of determining the intermediate hidden vector is the same as the process of determining the chunk hidden vector in the foregoing implementation. A second neural network obtains the intermediate hidden vector through multi-layer iteration. Details are not described herein again.

The preceding chunk hidden vector is an intermediate hidden vector generated through multi-layer iteration of the second chunk preceding the first chunk. The last vector may be a vector of a preset length at an end of the preceding chunk hidden vector. In an implementation, the determining the chunk hidden vector of the first chunk based on the last vector and the intermediate hidden vector may be implemented in the following manner:
Slice the last vector to a left side of the intermediate hidden vector, to obtain a first spliced vector; delete a sub-vector of a preset length starting from an end of the first spliced vector, to obtain a second spliced vector; and perform causal convolution processing on the second spliced vector, to obtain the chunk hidden vector of the first chunk.

For example, a vector includes a plurality of elements. A length of the vector may be represented by a quantity of elements in the vector; in other words, the preset length may be represented as a preset quantity of elements. The deleting a sub-vector of a preset length starting from an end of the first spliced vector may be implemented in the following manner: Delete a sub-vector of the preset quantity of elements starting from the end of the first spliced vector, to form the second spliced vector.

As shown in FIG. 12, the last vector in a preceding chunk hidden vector and an intermediate hidden vector from which the last vector is removed are spliced to obtain a final vector (the second spliced vector in the foregoing), and the final vector is inputted into a causal convolutional layer for convolution to obtain a chunk hidden vector. Causal convolution means that only information at a current time step and information before the current time step in an input sequence is considered, and future information is not considered. This characteristic makes causal convolution especially useful for processing time sequence data because causal convolution can obtain time sequence dependency of a sequence while avoiding prediction on future data. After causal convolution is performed, normalization processing may further be performed on a convolution result, to obtain the chunk hidden vector.

In an implementation of operation 1110 to operation 1130, an intermediate hidden vector of a first chunk is fused with a preceding chunk hidden vector, which can further reduce a marginal effect, thereby improving naturalness and smoothness of synthesized audio. The marginal effect means that when each chunk is independently processed, there is a situation in which information is incomplete or inaccurate in a boundary part of each chunk. The intermediate hidden vector of the first chunk is fused with the preceding chunk hidden vector. When a current chunk is processed, not only information of the current chunk is considered, but also information of a preceding chunk can be used, thereby supplementing missing context at a chunk boundary and reducing an error caused by a lack of preceding information. Fusing hidden vectors enables a model to better obtain global information of audio data. By fusing hidden vectors of different chunks, the model can consider context of an entire audio sequence when processing each chunk, thereby improving a global perceptual capability of the model, reducing the marginal effect caused by local processing, resulting in natural transition between audio chunks, and improving continuity of the synthesized audio.

In an implementation of operation 910 to operation 930, a chunk hidden vector is determined based on a self-attention mechanism, which helps obtain a dependency relationship between long-distance audio frames, thereby improving prediction accuracy of the chunk hidden vector. The self-attention mechanism can learn a more abstract and higher-level feature representation in audio. The self-attention mechanism may fuse global information into the chunk hidden vector, so that the chunk hidden vector can represent a feature of the audio more accurately.

In an implementation of operation 710 to operation 730, audio frame features of a plurality of audio frames are first chunked, and then a chunk hidden vector is calculated based on each chunk by using a second neural network. After calculating a chunk hidden vector of a chunk, the second neural network may directly input the chunk hidden vector into an audio generation network for audio generation, and meanwhile, calculates a chunk hidden vector of a next chunk. In this way, an object does not need to wait for generation of audio frame hidden vectors corresponding to all audio frames, and only needs to wait for generation of a chunk hidden vector and an audio frame corresponding to the 1^{st} chunk, thereby further improving response efficiency of audio synthesis processing.

### Detailed description of operation 330

In operation 330, a plurality of chunk hidden vectors are inputted into an audio generation network based on a sequence of chunks.

For each chunk in target audio, the audio generation network generates an audio frame of the chunk based on a chunk hidden vector of the chunk and a chunk hidden vector of a preceding chunk of the chunk while playing the preceding chunk of the chunk, and adds the generated audio frame to a target playing queue for playing. The preceding chunk of the chunk may be one or more chunks preceding the chunk in the sequence of chunks.

The audio generation network may be a generation network and is configured to perform audio generation. The target playing queue is configured to store playable audio. After an audio frame corresponding to the 1^{st} chunk is generated, the audio frame is added to the target playing queue, and the object can start to play audio through the target playing queue. During audio play, audio frames corresponding to subsequent chunks are continuously generated and added to the target playing queue. When an audio frame corresponding to a subsequent chunk is added to the target playing queue, audio currently played in the target playing queue is not paused, and the audio frame is automatically added to an end of the target playing queue to wait to be played.

An audio sequence belongs to a time-related sequence. Therefore, a preceding audio frame affects generation of a subsequent audio frame. Therefore, causal convolution may be used in the audio generation network to perform audio generation.

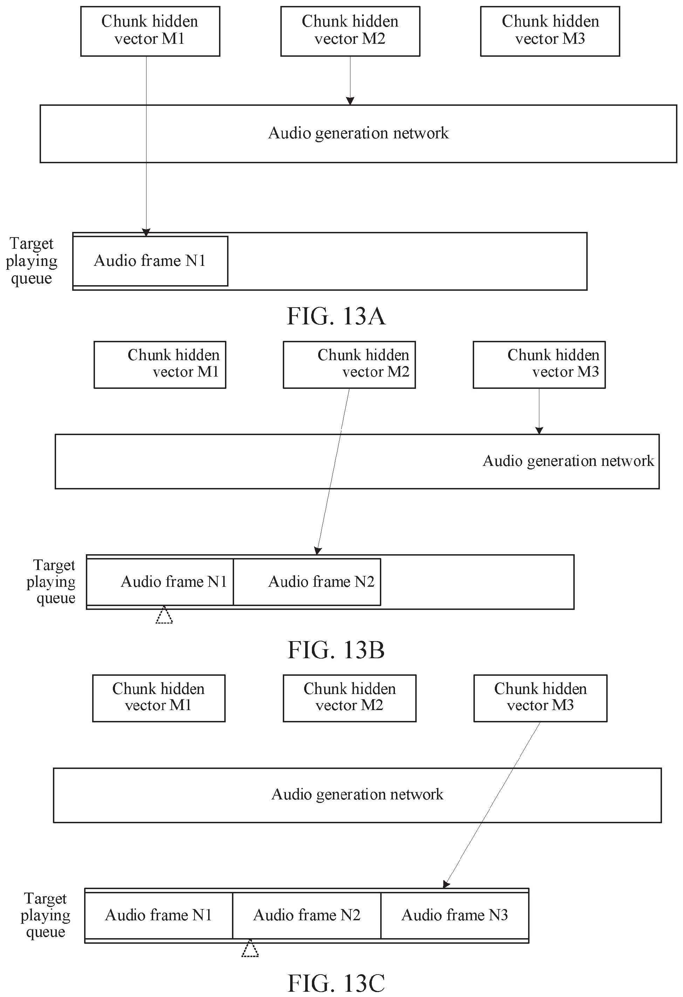

As shown in FIG. 13A to FIG. 13C, a chunk hidden vector M1, a chunk hidden vector M2, and a chunk hidden vector M3 may be obtained based on a sequence of chunks. In FIG. 13A, the chunk hidden vector M1 is first inputted into an audio generation network, and an audio frame N1 can be obtained. The audio frame N1 includes a plurality of audio frames included in the chunk. The audio frame N1 is added to a target playing queue, and an object can start to play the audio frame N1. While the audio frame N1 is added to the target playing queue, the chunk hidden vector M2 is inputted into the audio generation network for audio generation, as shown in FIG. 13B, to obtain an audio frame N2. In this case, the audio in the target playing queue is played to a position indicated by a triangle, the audio frame N2 is added to the target playing queue, and the chunk hidden vector M3 is inputted into the audio generation network, as shown in FIG. 13C, to obtain an audio frame N3. In this case, the audio in the target playing queue is played to a position indicated by a triangle, and the audio frame N3 is added to the target playing queue.

In an implementation of operation 710 to operation 730, an audio frame feature is divided into a plurality of chunk feature vectors based on a correspondence between a chunk and an audio frame, and then a chunk hidden vector of each chunk is generated based on a chunk sequence by using a second neural network. Based on this, in an implementation, the inputting the plurality of chunk hidden vectors into an audio generation network based on a sequence of the chunks may be implemented in the following manner: Input, when a chunk hidden vector of a first chunk is generated, the chunk hidden vector into the audio generation network, the operation of inputting the chunk hidden vector into the audio generation network being performed before a third chunk following the first chunk in the plurality of chunks is generated, or after the third chunk following the first chunk in the plurality of chunks is generated.

In other words, when generating a chunk hidden vector of a first chunk, the second neural network directly inputs the chunk hidden vector into the audio generation network for audio generation, and simultaneously starts to generate a chunk hidden vector for a next chunk, and the audio generation network generates an audio frame based on the chunk hidden vector of the first chunk.

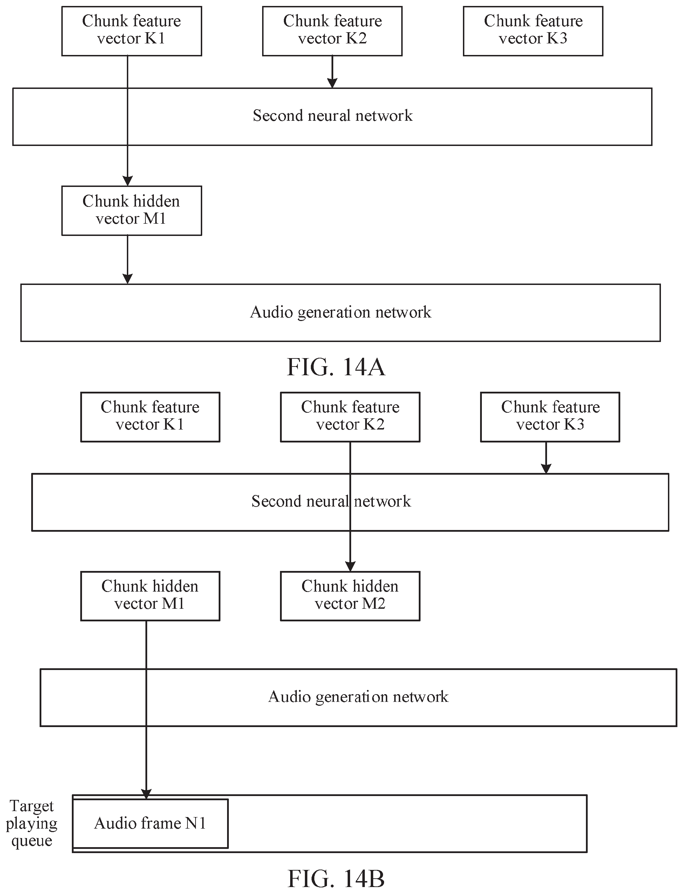

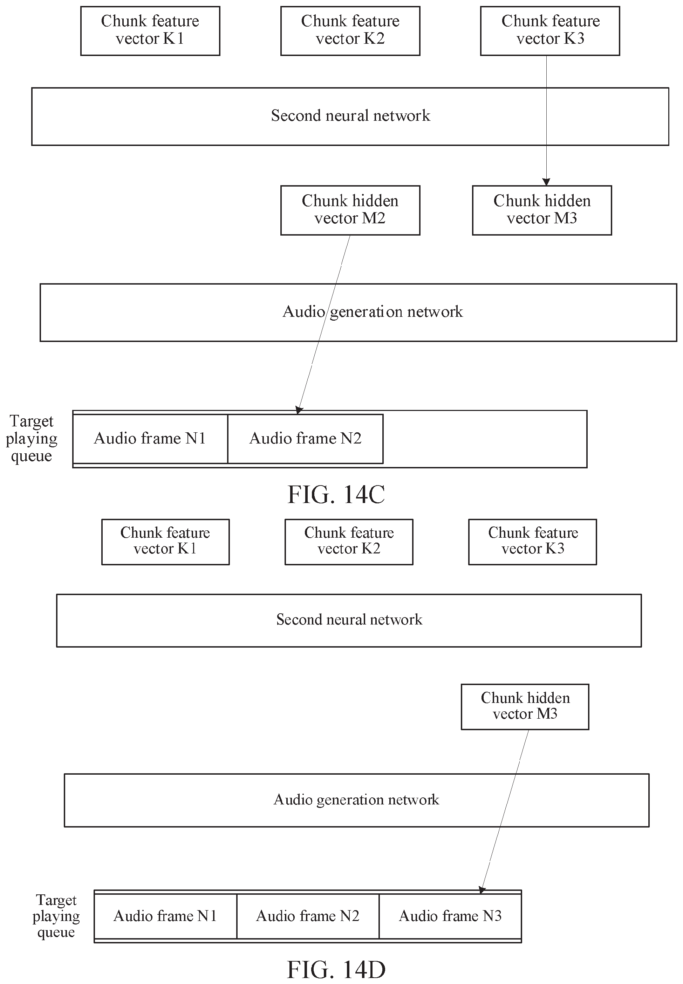

As shown in FIG. 14A to FIG. 14D, a chunk feature vector K1, a chunk feature vector K2, and a chunk feature vector K3 may be obtained based on a chunk sequence. As shown in FIG. 14A, the chunk feature vector K1 is first inputted into a second neural network for convolution, to obtain a chunk hidden vector M1, the chunk hidden vector M1 is inputted into an audio generation network, and the chunk feature vector K2 is inputted into the second neural network. As shown in FIG. 14B, after generating an audio frame N1 for the chunk hidden vector M1, the audio generation network adds the audio frame N1 to a target playing queue, and the second neural network generates a chunk hidden vector M2 based on the chunk feature vector K2. As shown in FIG. 14C, the chunk hidden vector M2 is inputted into the audio generation network, and the chunk feature vector K3 is inputted into the second neural network. The audio generation network generates an audio frame N2 based on the chunk hidden vector M2, and adds the audio frame N2 to the target playing queue. Meanwhile, the second neural network generates a chunk hidden vector M3 based on the chunk feature vector K3. As shown in FIG. 14D, the chunk hidden vector M3 is inputted into the audio generation network to obtain an audio frame N3. The audio frame N3 is added to the target playing queue, and target audio is completely generated.

In this way, while waiting for the target audio to be generated, an object only needs to wait for generation of a chunk hidden vector and an audio frame corresponding to a first chunk before starting to play audio, thereby further improving response efficiency of audio synthesis.

Because there is no preceding chunk of the 1^{st} chunk in the target audio, when a chunk is the 1^{st} chunk in the target audio, a value of the preceding chunk is null. Based on this, in an implementation, the generating, for each chunk in target audio, an audio frame of the chunk based on a chunk hidden vector of the chunk and a chunk hidden vector of a preceding chunk of the chunk while playing the preceding chunk of the chunk, and adding the generated audio frame to a target playing queue for playing may be implemented in the following manner:
For the 1^{st} chunk in the target audio, generate an audio frame of the 1^{st} chunk based on the 1^{st} chunk hidden vector, and add the audio frame to the target playing queue for playing.

For a subsequent chunk following the 1^{st} chunk, generate an audio frame of the subsequent chunk based on a chunk hidden vector of the subsequent chunk and a chunk hidden vector of a preceding chunk of the subsequent chunk, and add the audio frame to the target playing queue for playing, generating the audio frame of the subsequent chunk and adding the audio frame to the target playing queue being performed simultaneously with playing the preceding chunk of the subsequent chunk.

Therefore, the 1^{st} chunk in the target audio generates the audio frame at the beginning of the target audio based on the chunk hidden vector of the 1^{st} chunk, and the subsequent chunk following the 1^{st} chunk generates the audio frame of the subsequent chunk based on the chunk hidden vector of the subsequent chunk and the chunk hidden vector of the preceding chunk of the subsequent chunk. This results in a smoother splicing of the audio frame of the subsequent chunk with an audio frame of a preceding chunk in the target playing queue, thereby improving accuracy of generating the target audio.

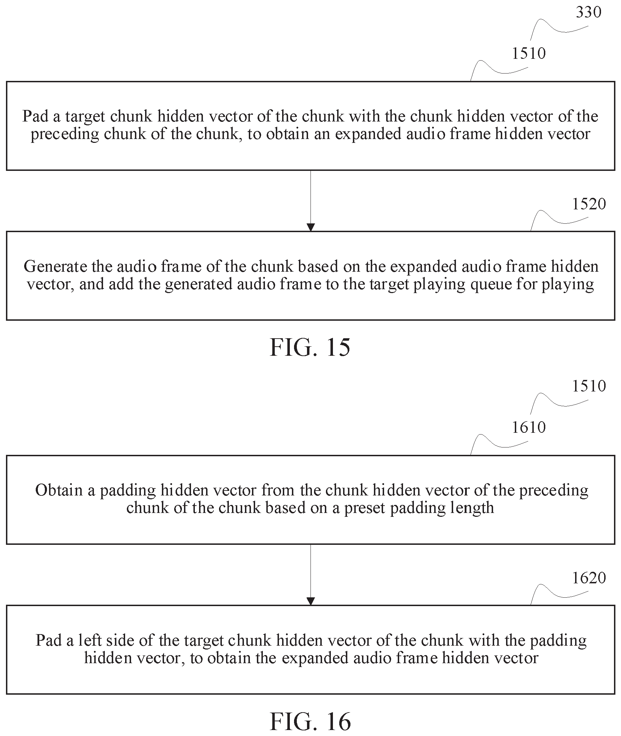

In an implementation, as shown in FIG. 15, the generating an audio frame of the chunk based on a chunk hidden vector of the chunk and a chunk hidden vector of a preceding chunk of the chunk, and adding the generated audio frame to a target playing queue for playing may be implemented in the following manner:
Operation 1510: Pad a target chunk hidden vector of the chunk with the chunk hidden vector of the preceding chunk of the chunk, to obtain expanded audio frame hidden vector.
Operation 1520: Generate the audio frame of the chunk based on the expanded audio frame hidden vector, and add the generated audio frame to the target playing queue for playing.

In a process of performing convolution on the chunk hidden vector, vectors at two ends struggle to be sufficiently convolved with other features. Therefore, features at two ends may be sufficiently fused by padding the two ends of the chunk hidden vector. The target chunk hidden vector is a chunk hidden vector corresponding to a chunk of which an audio frame is being generated. To consider impact of the preceding chunk of the chunk on chunk audio synthesis, the target chunk hidden vector of the chunk may be padded with the chunk hidden vector of the preceding chunk of the chunk, so that chunk hidden vectors can be fully fused.

In an implementation, as shown in FIG. 16, the padding a target chunk hidden vector of the chunk with the chunk hidden vector of the preceding chunk of the chunk, to obtain expanded audio frame hidden vector may be implemented in the following manner:
Operation 1610: Obtain a padding hidden vector from the chunk hidden vector of the preceding chunk of the chunk based on a preset padding length.
Operation 1620: Pad a left side of the target chunk hidden vector of the chunk with the padding hidden vector, to obtain the expanded audio frame hidden vector.

The preset padding length refers to a length of a vector configured to pad the target chunk hidden vector of the chunk. For example, if the preset padding length is 4, four elements may be obtained from an end of the chunk hidden vector of the preceding chunk of the chunk to be used as the padding hidden vector.

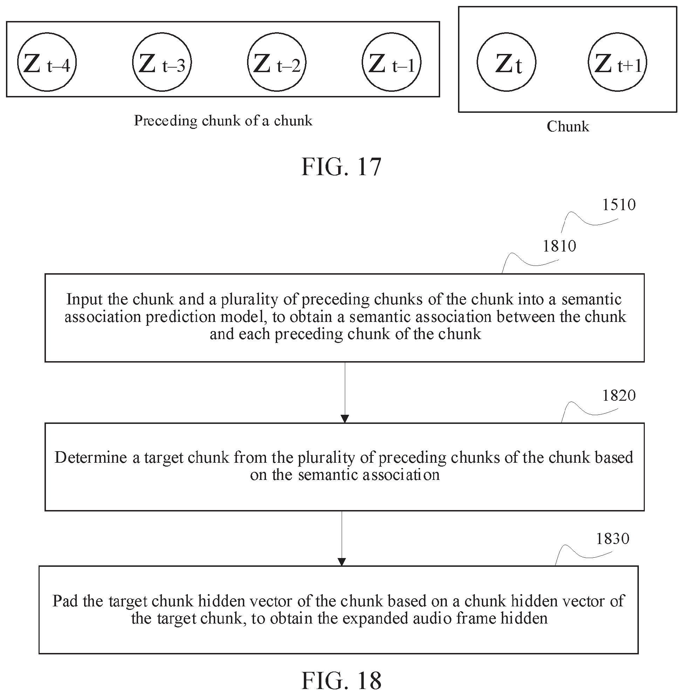

After the padding hidden vector is obtained, the left side of the target chunk hidden vector of the chunk is padded with the padding hidden vector, to obtain the expanded audio frame hidden vector. As shown in FIG. 17, zₜ and zₜ₊₁ are target chunk hidden vectors of the chunk; and zₜ₋₁ to zₜ₋₄ are padding hidden vectors obtained from the chunk hidden vector of the preceding chunk of the chunk, and are padded to a left side of zₜ. Therefore, zₜ₋₄ to zₜ₊₁ jointly form the expanded audio frame hidden vector, which is configured to generate the audio frame corresponding to the chunk.

The padding hidden vector is padded to the left side of the target chunk hidden vector, so that causal convolution learns continuity between audio frame sequences, thereby improving accuracy of audio frame generation.

When a chunk has a plurality of preceding chunks, associations between different preceding chunks and the chunk may be different. For example, in speech audio, audio from the 1^{st} frame to the 10^{th} frame is speech audio, audio from the 11^{th} frame to the 20^{th} frame is a blank period, and audio from the 21^{St} frame to the 30^{th} frame remains speech audio. Therefore, the audio from the 1^{st} frame to the 10^{th} frame may have a greater influence on generation of the audio from the 21^{st} frame to the 30^{th} frame. Based on this, in an implementation, as shown in FIG. 18, the padding a target chunk hidden vector of the chunk with the chunk hidden vector of the preceding chunk of the chunk, to obtain expanded audio frame hidden vector may be implemented in the following manner:
Operation 1810: Input the chunk and a plurality of preceding chunks of the chunk into a semantic association prediction model, to obtain a semantic association between the chunk and each preceding chunk of the chunk.
Operation 1820: Determine a target chunk from the plurality of preceding chunks of the chunk based on the semantic association.
Operation 1830: Pad the target chunk hidden vector of the chunk based on a chunk hidden vector of the target chunk, to obtain the expanded audio frame hidden vector.

The semantic association prediction model may be a neural network model, and is configured to predict the semantic association between the chunk and a preceding chunk of the chunk. A preceding chunk having a high semantic association with the chunk may have a great influence on generation of the audio frame of the chunk. Therefore, the target chunk may be determined from the plurality of preceding chunks of the chunk based on the semantic association.

The target chunk is determined from the plurality of preceding chunks of the chunk based on the semantic association. A preceding chunk having a semantic association greater than a preset threshold may be determined as the target chunk. Alternatively, the semantic associations of the preceding chunks may be sorted, and a preceding chunk ranked within a preset range is determined as the target chunk.

After the target chunk is determined, the target chunk hidden vector of the chunk is padded based on the chunk hidden vector of the target chunk, to obtain the expanded audio frame hidden vector. During padding, a plurality of target chunks may be sorted based on a sequence of chunks, and a padding hidden vector is obtained from the plurality of target chunks to pad the target chunk hidden vector. Alternatively, the plurality of target chunks may be sorted based on a sequence of semantic associations, and the padding hidden vector is obtained from the plurality of target chunks to pad the target chunk hidden vector.

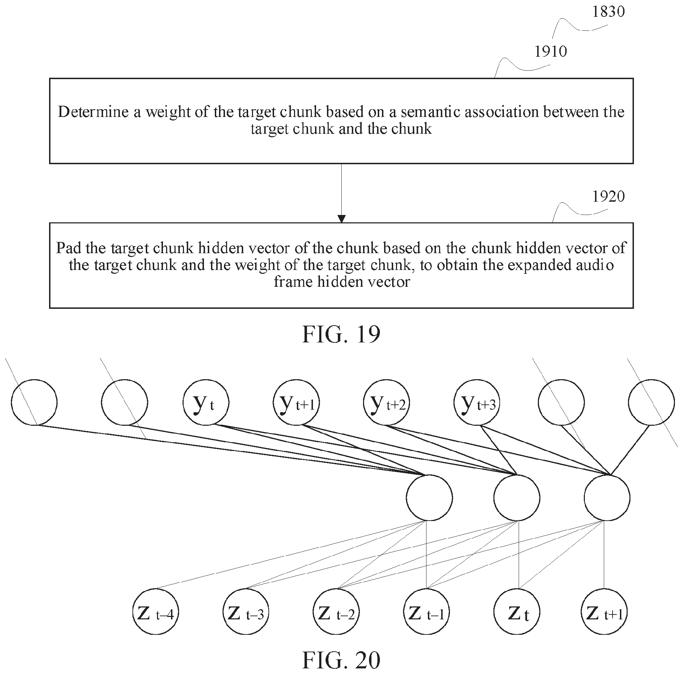

In an implementation, as shown in FIG. 19, the padding the target chunk hidden vector of the chunk based on a chunk hidden vector of the target chunk, to obtain the expanded audio frame hidden vector may be implemented in the following manner:
Operation 1910: Determine a weight of the target chunk based on a semantic association between the target chunk and the chunk.
Operation 1920: Pad the target chunk hidden vector of the chunk based on the chunk hidden vector of the target chunk and the weight of the target chunk, to obtain the expanded audio frame hidden vector.

Because target chunks having different semantic associations have different influences on generation of the audio frame of the chunk, in addition to adjusting a sequence of target chunks, different weights may further be determined for different target chunks. A target chunk having the highest semantic association has a high weight, so that the target chunks having different semantic associations have more significant influence on generation of the audio frame of the chunk.

For example, the target chunks include a chunk S1, a chunk S2, and a chunk S3, and semantic associations of the three target chunks are respectively 0.69, 0.82, and 0.73. Weights determined for the three target chunks are respectively 0.2, 0.5, and 0.3.

When the target chunk hidden vector is padded, the chunk hidden vector corresponding to the target chunk may be multiplied by a respective weight, and the target chunk hidden vector is padded based on a multiplication result, to obtain the expanded audio frame hidden vector.

By padding the target chunk hidden vector based on the weight of the target chunk, the target chunk having different semantic associations with the chunk exert a more significant influence on generation of the audio frame of the chunk, thereby improving accuracy of audio frame generation.

In an implementation of operation 1810 to operation 1830, the target chunk having a large influence on generation of the audio frame of the chunk may be determined from the plurality of preceding chunks based on the semantic association, and the target chunk hidden vector is padded with the target chunk, thereby helping improve accuracy of generation of the audio frame of the chunk based on the expanded audio frame hidden vector. By padding the hidden vector with the target chunk having a high semantic association, the generated audio frame more matches the context in semantic and acoustic features. During music generation, a padded hidden vector enables a generated music segment to be better fused with a preceding melody, rhythm, and the like, making the music sound smoother. The target chunk hidden vector includes more accurate semantic and feature information, and can provide more reliable guidance for audio frame generation. For example, in a voice synthesis task, problems such as incorrect pronunciation and unnatural pauses in generated voice are reduced, thereby improving accuracy and quality of voice synthesis.

After the expanded audio frame hidden vector is obtained, the audio frame of the chunk may be generated based on the expanded audio frame hidden vector.

An audio generation network may be a multi-layer neural network, and performs iterative causal convolution based on the expanded audio frame hidden vector to obtain the audio frame of the chunk. At each layer of the multi-layer neural network, an expanded audio hidden vector may be obtained by padding an input vector of the chunk hidden vector of the preceding chunk of the chunk at this layer to an input vector of the chunk at this layer. Using FIG. 17 as an example, at a z^{th} layer of the multi-layer neural network, zₜ and zₜ₊₁ are initial vectors inputted into the z^{th} layer by the chunk, and zₜ₋₁ to zₜ₋₄ are vectors inputted into the z^{th} layer by the preceding chunk of the chunk during audio frame generation. When an output vector of the z^{th} layer, that is, an input vector of a y^{th} layer, is obtained based on zₜ₋₄ and zₜ₊₁, a vector inputted into the y^{th} layer by the preceding chunk of the chunk during audio frame generation may be further obtained, and is padded to the input vector of the y^{th} layer corresponding to the chunk. This process is repeated iteratively to gradually generate the audio frame of the chunk. A padding process is the same as that in the foregoing implementation, and details are not described herein again.

At each layer of the multi-layer neural network, causal convolution processing may be first performed on the expanded audio hidden vector, and then transposed causal convolution processing is performed on a result of the causal convolution processing, to obtain an output feature vector of this layer. Through multi-layer iteration, the audio frame of the chunk is outputted at the last layer of the audio generation network. The causal convolution processing and the transposed causal convolution processing are successively performed to obtain a long-term dependency relationship of an audio frame feature sequence, and restore a feature size at each layer.

As shown in FIG. 20, at the z^{th} layer in the multi-layer neural network, zₜ and zₜ₊₁ are initial vectors inputted into the z^{th} layer by the chunk, and zₜ₋₁ to zₜ₋₄ are vectors inputted into the z^{th} layer by the preceding chunk of the chunk during audio frame generation. A convolution kernel of causal convolution is 4, and a stepsize is 1. A convolution kernel of transposed causal convolution is 4, and a stepsize is 2. In a vector outputted through transposed causal convolution, because vectors at two ends do not fully fuse an input feature of the z^{th} layer, the vectors are deleted. Therefore, after causal convolution and transposed causal convolution, a finally obtained input vector of the y^{th} layer is yₜ to yₜ₊₃.

In an implementation of operation 1510 and operation 1520, the target chunk hidden vector of the chunk is padded with the chunk hidden vector of the preceding chunk of the chunk, so that in a process of performing causal convolution on the chunk, chunk information of a preceding second chunk is fused, thereby improving accuracy of generation of the audio frame of the chunk.

### Model training process of an audio processing method in an embodiment of this disclosure

There are two implementations of the audio processing method in this embodiment of this disclosure. One implementation includes: inputting to-be-synthesized audio data into a first neural network for feature extraction, to obtain an audio frame feature of each audio frame in target audio; chunking a plurality of audio frame features, to generate chunk feature vectors; calculating a chunk hidden vector of each chunk based on a chunk feature vector by using a second neural network; and finally, generating an audio frame of the chunk based on the chunk hidden vector by using an audio synthesis network. The other implementation includes: inputting the to-be-synthesized audio data into a third neural network for feature extraction, to obtain an audio frame feature of each audio frame in the target audio; inputting the audio frame feature into a fourth neural network for convolution, to obtain an audio frame hidden vector corresponding to each audio frame; chunking a plurality of audio frame hidden vectors to generate a chunk hidden vector of each chunk; and finally, generating an audio frame of the chunk based on the chunk hidden vector by using the audio synthesis network.

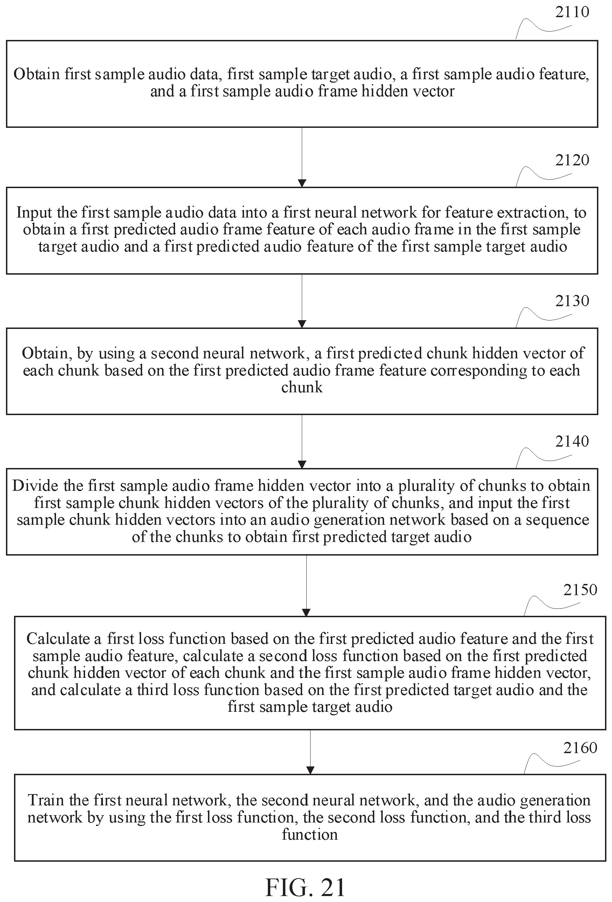

For the first implementation, in an implementation, as shown in FIG. 21, the first neural network, the second neural network, and an audio generation network are jointly trained through the following process:
Operation 2110: Obtain first sample audio data, first sample target audio, a first sample audio feature, and a first sample audio frame hidden vector.
Operation 2120: Input the first sample audio data into the first neural network for feature extraction, to obtain a first predicted audio frame feature of each audio frame in the first sample target audio and a first predicted audio feature of the first sample target audio.
Operation 2130: Obtain, by using the second neural network, a first predicted chunk hidden vector of each chunk based on the first predicted audio frame feature corresponding to each chunk.
Operation 2140: Divide the first sample audio frame hidden vector into a plurality of chunks to obtain first sample chunk hidden vectors of the plurality of chunks, and input the first sample chunk hidden vectors into the audio generation network based on a sequence of the chunks to obtain first predicted target audio.
Operation 2150: Calculate a first loss function based on the first predicted audio feature and the first sample audio feature, calculate a second loss function based on the first predicted chunk hidden vector of each chunk and the first sample audio frame hidden vector, and calculate a third loss function based on the first predicted target audio and the first sample target audio.
Operation 2160: Train the first neural network, the second neural network, and the audio generation network by using the first loss function, the second loss function, and the third loss function.

The first sample audio data may be source data configured for performing audio synthesis. The first sample target audio may be target audio corresponding to the first sample audio data. The first sample audio feature may be an overall audio feature of the target audio, for example, overall audio fundamental frequency, audio duration, and a Mel-frequency cepstral coefficient. The first sample audio frame hidden vector may be a frame-level hidden feature obtained by mapping a sample audio frame feature to a latent space. The first sample audio data, the first sample target audio, and the first sample audio feature may be obtained from a sample audio library, and the first sample audio frame hidden feature may be calculated by inputting the first sample audio data into a preset encoding network.

The first sample audio data is inputted into the first neural network, to obtain the first predicted audio frame feature of each audio frame in the first sample target audio. A prediction process is described in detail in the foregoing implementations, and details are not described herein again. The first neural network not only can predict a frame-level feature, but also can predict an overall audio feature of the first sample target audio. For example, the first sample audio feature includes the overall audio fundamental frequency, the audio duration, and the Mel-frequency cepstral coefficient. The first neural network may include a fundamental frequency prediction network, a duration prediction network, and a Mel-frequency cepstral coefficient prediction network, which are respectively configured to predict the foregoing three first predicted audio features.

First predicted audio frame features of a plurality of audio frames are divided into a plurality of chunks, to obtain predicted chunk features of the plurality of chunks. The predicted chunk features are inputted into the second neural network based on the sequence of the chunks, and the first predicted chunk hidden vector of each chunk is obtained based on the first predicted audio frame feature in each chunk by using the second neural network. The prediction process is described in detail in the foregoing implementations, and details are not described herein again.

The plurality of first sample chunk hidden vectors are inputted into the audio generation network based on the sequence of chunks, to obtain a predicted audio frame of each chunk. A process of generating the predicted audio frame by the audio generation network has been described in detail in the foregoing implementations, and details are not described herein again. Predicted audio frames of the chunks are spliced based on a sequence of audio frames, to obtain the target audio.

After the foregoing plurality of parameters are obtained, the first loss function is first calculated based on the first predicted audio feature and the first sample audio feature. The first loss function may be a sum of distances between sample values and predicted values corresponding to different audio features. The first loss function evaluates accuracy of feature extraction performed by the first neural network on the first sample target audio.

The second loss function is calculated based on the first predicted chunk hidden vector of each chunk and the first sample audio frame hidden vector. The second loss function may be a KL loss between the first predicted chunk hidden vector and the first sample audio frame hidden vector. The second loss function evaluates accuracy of feature acquisition performed by the second neural network model.

The third loss function is calculated based on the first predicted target audio and the first sample target audio. The third loss function may be a distance between a spectrum vector of the first predicted target audio and a spectrum vector of the first sample target audio. The third loss function evaluates audio generation accuracy of the audio generation network.

The first neural network, the second neural network, and the audio generation network are trained by using the first loss function, the second loss function, and the third loss function. This may be achieved by summing up the first loss function, the second loss function, and the third loss function, and training the first neural network, the second neural network, and the audio generation network by using a summation result.

In addition to the first loss function, the second loss function, and the third loss function, a loss of model training may further include a generator loss and a feature matching loss of the audio generation network. The generator loss is a loss between the first sample target audio and the first predicted target audio generated by the audio synthesis network. The feature matching loss measures a degree of difference between features extracted by the discriminator from the first sample target audio and the first predicted target audio. The first loss function, the second loss function, the third loss function, the generator loss, and the feature matching loss are summed, and the first neural network, the second neural network, and the audio generation network are trained by using a loss summation result.

An advantage of performing model training by using the foregoing method is that, accuracy of the first neural network, the second neural network, and the audio generation network can be separately evaluated and trained, thereby helping improve accuracy of model training.

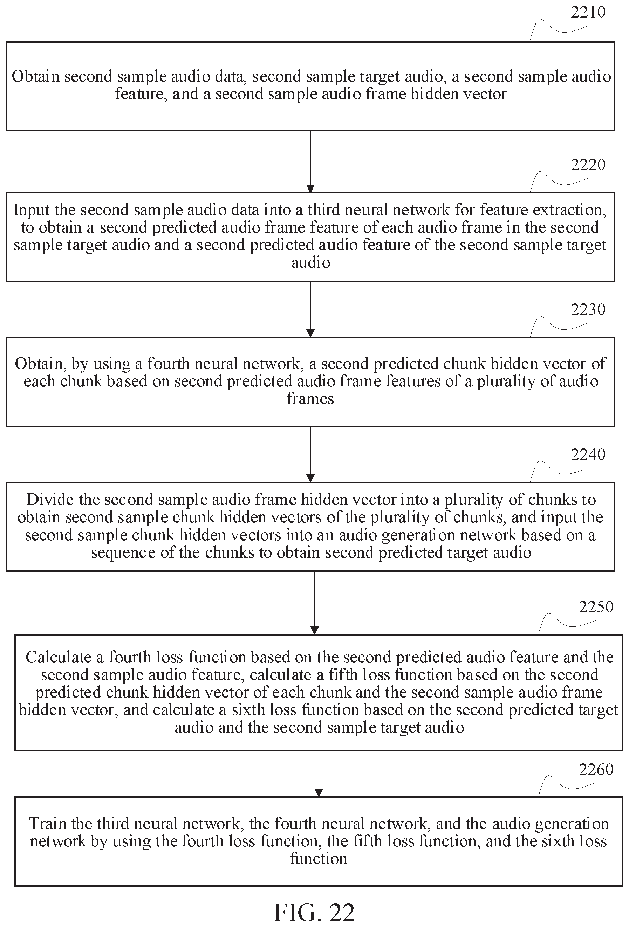

For the foregoing second implementation, in an implementation, as shown in FIG. 22, the third neural network, the fourth neural network, and the audio generation network are jointly trained through the following process:
Operation 2210: Obtain second sample audio data, second sample target audio, a second sample audio feature, and a second sample audio frame hidden vector.
Operation 2220: Input the second sample audio data into the third neural network for feature extraction, to obtain a second predicted audio frame feature of each audio frame in the second sample target audio and a second predicted audio feature of the second sample target audio.
Operation 2230: Perform, by using the fourth neural network, convolution based on second predicted audio frame features of a plurality of audio frames, to obtain a second predicted chunk hidden vector of each chunk.
Operation 2240: Divide the second sample audio frame hidden vector into a plurality of chunks to obtain second sample chunk hidden vectors of the plurality of chunks, and input the second sample chunk hidden vectors into the audio generation network based on a sequence of the chunks to obtain second predicted target audio.
Operation 2250: Calculate a fourth loss function based on the second predicted audio feature and the second sample audio feature, calculate a fifth loss function based on the second predicted chunk hidden vector of each chunk and the second sample audio frame hidden vector, and calculate a sixth loss function based on the second predicted target audio and the second sample target audio.
Operation 2260: Train the third neural network, the fourth neural network, and the audio generation network by using the fourth loss function, the fifth loss function, and the sixth loss function.

A difference between a training process of operation 2210 to operation 2260 and a training process of operation 2110 to operation 2160 is as follows: In the training process of operation 2210 to operation 2260, the fourth neural network is used to predict the audio frame hidden vector based on the second predicted audio frame features corresponding to all audio frames of the second sample target audio, and then, all audio frame vectors are chunked to obtain the second predicted chunk hidden vector of each chunk. In the training process of operation 2110 to operation 2160, the second neural network is used to directly predict the first predicted chunk hidden vector corresponding to the chunk based on chunked first predicted audio frame feature. The remaining operations are the same, and therefore are not described again.

### Detailed implementation diagram of an audio processing method in an embodiment of this disclosure

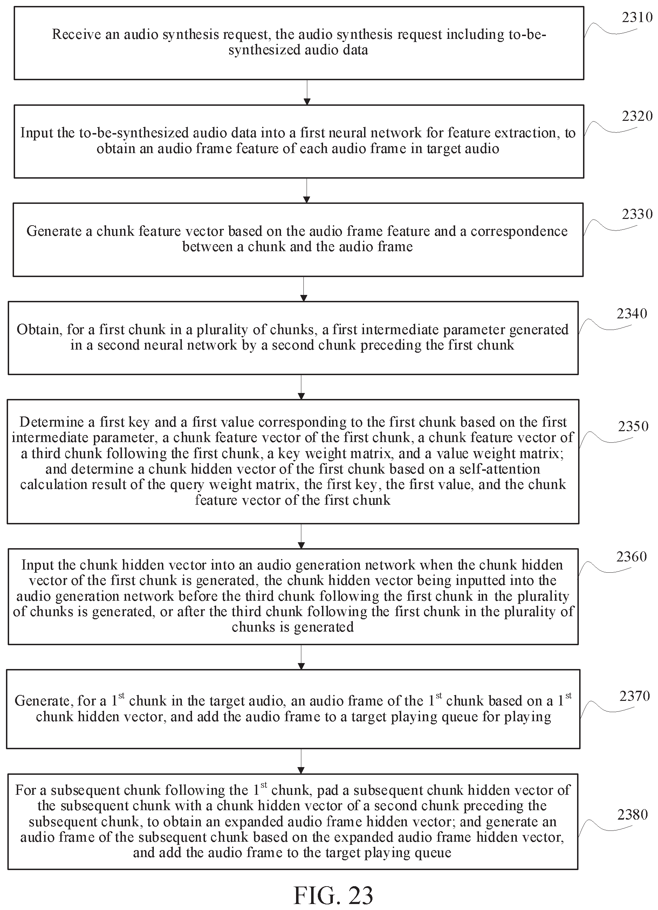

Referring to FIG. 23, implementation details of an implementation of an audio processing method in this embodiment of this disclosure are described in detail by using an example.

Operation 2310: Receive an audio synthesis request, the audio synthesis request including to-be-synthesized audio data.

Operation 2320: Input the to-be-synthesized audio data into a first neural network for feature extraction, to obtain an audio frame feature of each audio frame in target audio.

Operation 2330: Generate a chunk feature vector based on the audio frame feature and a correspondence between a chunk and the audio frame.

Operation 2340: Obtain, for a first chunk in a plurality of chunks, a first intermediate parameter generated in a second neural network by a second chunk preceding the first chunk.

Operation 2350: Determine a first key and a first value corresponding to the first chunk based on the first intermediate parameter, a chunk feature vector of the first chunk, a chunk feature vector of a third chunk following the first chunk, a key weight matrix, and a value weight matrix; and determine a chunk hidden vector of the first chunk based on a self-attention calculation result of the query weight matrix, the first key, the first value, and the chunk feature vector of the first chunk.

Operation 2360: Input the chunk hidden vector into an audio generation network when the chunk hidden vector of the first chunk is generated, the chunk hidden vector being inputted into the audio generation network before the third chunk following the first chunk in the plurality of chunks is generated, or after the third chunk following the first chunk in the plurality of chunks is generated.

Operation 2370: For a 1^{st} chunk in the target audio, generate an audio frame of the 1^{st} chunk based on a 1^{st} chunk hidden vector, and add the audio frame to a target playing queue for playing.

Operation 2380: For a subsequent chunk following the 1^{st} chunk, pad a subsequent chunk hidden vector of the subsequent chunk with a chunk hidden vector of a second chunk preceding the subsequent chunk, to obtain an expanded audio frame hidden vector; and generate an audio frame of the subsequent chunk based on the expanded audio frame hidden vector, and add the audio frame to the target playing queue.

### Description of an apparatus and a device in an embodiment of this disclosure

Although the operations in the flowchart are sequentially shown according to indication of an arrow, the operations are not necessarily sequentially performed according to a sequence indicated by the arrow. Unless otherwise explicitly specified in the embodiments, execution of the operations is not strictly limited, and the operations may be performed in other sequences. Moreover, at least a part of operations in the foregoing flowchart may include a plurality of operations or a plurality of stages. These operations or stages are not necessarily executed at the same time, but can be executed at different times. The order of execution of these operations or stages is not necessarily performed sequentially, but may be performed in turn or alternately with other operations or at least a part of operations or stages of other operations.

In each specific implementation of this disclosure, when related processing needs to be performed based on data related to a target content characteristic, such as attribute information or an attribute information set of target content, permission or consent for the target content is first obtained, and collection, use, processing, and the like of the data comply with related laws and regulations and standards. In addition, in the embodiments of this disclosure, when the attribute information of the target content needs to be obtained, separate permission or separate consent for the target content may be obtained through a pop-up window or by jumping to a confirmation page. After the separate permission or separate consent for the target content is explicitly obtained, necessary data related to the target content required for normal operation of the embodiments of this disclosure is obtained.

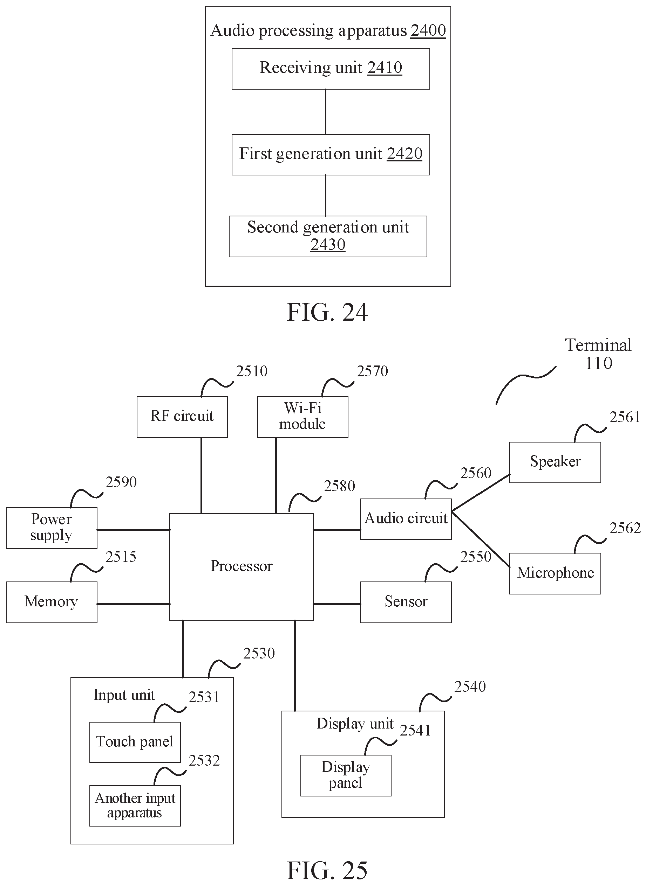

FIG. 24 is a schematic structural diagram of an audio processing apparatus 2400 according to an embodiment of this disclosure. The audio processing apparatus 2400 includes:
a receiving unit 2410, configured to receive an audio synthesis request, the audio synthesis request including to-be-synthesized audio data;
a first generation unit 2420, configured to generate chunk hidden vectors of a plurality of chunks based on the to-be-synthesized audio data, each chunk including a plurality of consecutive audio frames in target audio, the target audio being audio synthesized based on the audio synthesis request, the plurality of chunks being sorted based on a sequence of audio frames included in the chunks, and audio frames of two adjacent chunks being consecutive; and
a second generation unit 2430, configured to input the plurality of chunk hidden vectors into an audio generation network based on a sequence of the chunks, the audio generation network being configured to perform the following processing: generating, for each chunk in the target audio, an audio frame of the chunk based on a chunk hidden vector of the chunk and a chunk hidden vector of a preceding chunk of the chunk while playing the preceding chunk of the chunk, and adding the generated audio frame to a target playing queue for playing.

In some embodiments, the first generation unit 2420 is further configured to:
input the to-be-synthesized audio data into a first neural network for feature extraction, to obtain an audio frame feature of each audio frame in the target audio;
generate a chunk feature vector based on the audio frame feature and a correspondence between the chunk and the audio frame; and
input the chunk feature vector of each chunk into a second neural network for convolution, to obtain a chunk hidden vector of each chunk.

In some embodiments, the first generation unit 2420 is further configured to:
obtain, for a first chunk in the plurality of chunks, a first intermediate parameter generated in the second neural network by a second chunk preceding the first chunk; and
perform, by using the second neural network, convolution based on the first intermediate parameter, a chunk feature vector of the first chunk, and a chunk feature vector of a third chunk following the first chunk, to obtain a chunk hidden vector of the first chunk.

In some embodiments, the first generation unit 2420 is further configured to:
input the chunk hidden vector into the audio generation network when the chunk hidden vector of the first chunk is generated, the operation of inputting the chunk hidden vector into the audio generation network being performed before the third chunk following the first chunk in the plurality of chunks is generated, or after the third chunk following the first chunk in the plurality of chunks is generated.

In some embodiments, the first generation unit 2420 is further configured to:
obtain a key weight matrix, a value weight matrix, and a query weight matrix of the chunk feature vector of the first chunk;
determine a first key and a first value corresponding to the first chunk based on the first intermediate parameter, the chunk feature vector of the first chunk, the chunk feature vector of the third chunk following the first chunk, the key weight matrix, and the value weight matrix; and
determine the chunk hidden vector of the first chunk based on a self-attention calculation result of the query weight matrix, the first key, the first value, and the chunk feature vector of the first chunk.

In some embodiments, the first generation unit 2420 is further configured to:
perform normalization processing on the chunk feature vector of the first chunk, to obtain a normalized chunk feature vector; and
sum up a self-attention calculation result of the query weight matrix, the first key, the first value, and the normalized chunk feature vector, and the chunk feature vector of the first chunk, and determine the chunk hidden vector of the first chunk based on a summation result.

In some embodiments, the first generation unit 2420 is further configured to:
determine an intermediate hidden vector based on the self-attention calculation result of the query weight matrix, the first key, the first value, and the chunk feature vector of the first chunk;
obtain the last vector of a preceding chunk hidden vector corresponding to the second chunk preceding the first chunk; and
determine the chunk hidden vector of the first chunk based on the last vector and the intermediate hidden vector.

In some embodiments, the first neural network, the second neural network, and the audio generation network are jointly trained through the following process:
obtaining first sample audio data, first sample target audio, a first sample audio feature, and a first sample audio frame hidden vector;
inputting the first sample audio data into the first neural network for feature extraction, to obtain a first predicted audio frame feature of each audio frame in the first sample target audio and a first predicted audio feature of the first sample target audio;
obtaining, by using the second neural network, a first predicted chunk hidden vector of each chunk based on the first predicted audio frame feature corresponding to each chunk;
dividing the first sample audio frame hidden vector into a plurality of chunks to obtain first sample chunk hidden vectors of the plurality of chunks, and inputting the first sample chunk hidden vectors into the audio generation network based on a sequence of the chunks to obtain first predicted target audio;
calculating a first loss function based on the first predicted audio feature and the first sample audio feature, calculating a second loss function based on the first predicted chunk hidden vector of each chunk and the first sample audio frame hidden vector, and calculating a third loss function based on the first predicted target audio and the first sample target audio; and
training the first neural network, the second neural network, and the audio generation network by using the first loss function, the second loss function, and the third loss function.

In some embodiments, the first generation unit 2420 is further configured to:
input the to-be-synthesized audio data into a third neural network for feature extraction, to obtain an audio frame feature of each audio frame in the target audio;
input the audio frame feature of each audio frame into a fourth neural network for convolution, to obtain an audio frame hidden vector corresponding to each audio frame; and
generate a chunk hidden vector based on the audio frame hidden vector and the correspondence between the chunk and the audio frame.

In some embodiments, the second generation unit 2430 is further configured to:
generate, for the 1^{st} chunk in the target audio, an audio frame of the 1^{st} chunk based on the 1^{st} chunk hidden vector, and add the audio frame to the target playing queue for playing; and
generate, for a subsequent chunk following the 1^{st} chunk, an audio frame of the subsequent chunk based on a chunk hidden vector of the subsequent chunk and a chunk hidden vector of a preceding chunk of the subsequent chunk, and add the audio frame to the target playing queue for playing, generating the audio frame of the subsequent chunk and adding the audio frame to the target playing queue being performed simultaneously with playing the preceding chunk of the subsequent chunk.

In some embodiments, the second generation unit 2430 is further configured to:
pad a target chunk hidden vector of the chunk with the chunk hidden vector of the preceding chunk of the chunk, to obtain an expanded audio frame hidden vector; and
generate the audio frame of the chunk based on the expanded audio frame hidden vector, and add the generated audio frame to the target playing queue for playing.

In some embodiments, the second generation unit 2430 is further configured to:
obtain a padding hidden vector from the chunk hidden vector of the preceding chunk of the chunk based on a preset padding length; and
pad a left side of the target chunk hidden vector of the chunk with the padding hidden vector, to obtain the expanded audio frame hidden vector.

In some embodiments, the second generation unit 2430 is further configured to:
input the chunk and a plurality of preceding chunks of the chunk into a semantic association prediction model, to obtain a semantic association between the chunk and each preceding chunk of the chunk;
determine a target chunk from the plurality of preceding chunks of the chunk based on the semantic association; and
pad the target chunk hidden vector of the chunk based on a chunk hidden vector of the target chunk, to obtain the expanded audio frame hidden vector.

In some embodiments, the second generation unit 2430 is further configured to:
determine a weight of the target chunk based on a semantic association between the target chunk and the chunk; and
pad the target chunk hidden vector of the chunk based on the chunk hidden vector of the target chunk and the weight of the target chunk, to obtain the expanded audio frame hidden vector.

Referring to FIG. 25, FIG. 25 is a structural block diagram of a part of a terminal 110 implementing the audio processing method in an embodiment of this disclosure. The terminal includes components such as a radio frequency (RF) circuit 2510, a memory 2515, an input unit 2530, a display unit 2540, a sensor 2550, an audio circuit 2560, a wireless fidelity (Wi-Fi) module 2570, a processor 2580, and a power supply 2590. A person skilled in the art may understand that the structure of the terminal 110 shown in FIG. 25 does not constitute a limitation to the mobile phone or the computer, and the mobile phone or the computer may include more components or fewer components than those shown in the figure, or some components may be combined, or a different component deployment may be used.

The RF circuit 2510 is configured to receive and transmit signals during an information receiving and transmission process or a call process. Specifically, the RF circuit 2510 receives downlink information from a base station, then delivers the downlink information to the processor 2580 for processing, and transmits designed uplink data to the base station.

The memory 2515 is configured to store a software program and module. The processor 2580 runs the software program and module stored in the memory 2515, to implement various functional applications and data processing of the content terminal.

The input unit 2530 is configured to receive inputted digit or character information, and generate a key signal input related to the setting and function control of the content terminal. Specifically, the input unit 2530 may include a touch panel 2531 and another input apparatus 2532.

The display unit 2540 is configured to display inputted or provided information and various menus of the content terminal. The display unit 2540 may include a display panel 2541.

The audio circuit 2560, a speaker 2561, and a microphone 2562 may provide audio interfaces.

In this embodiment, the processor 2580 included in the terminal 110 may perform the audio processing method in the foregoing embodiments.

In this embodiment of this disclosure, the terminal 110 includes, but is not limited to, a mobile phone, a computer, an intelligent voice interaction device, an intelligent household appliance, an in-vehicle terminal, a flight vehicle, and the like. This embodiment of the present invention can be applied to various scenarios, including but not limited to song generation and voice generation.

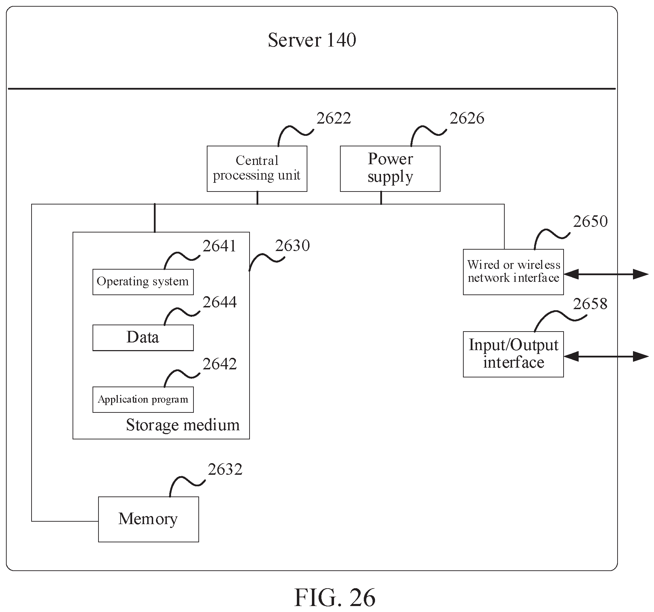

FIG. 26 is a structural block diagram of a part of a server 140 implementing the audio processing method in an embodiment of this disclosure. The server 140 may vary greatly due to different configurations or performance, and may include one or more central processing units (CPUs) 2622 (for example, one or more processors) and a memory 2632, and one or more storage media 2630 (for example, one or more mass storage apparatus) that store disclosure programs 2642 or data 2644. The memory 2632 and the storage medium 2630 may be transient storage or persistent storage. A program stored in the storage medium 2630 may include one or more modules (not marked in the figure), and each module may include a series of instruction operations on the server. Further, the CPU 2622 may be configured to communicate with the storage medium 2630, and perform, on the server, a series of instruction operations in the storage medium 2630.

The server 140 may further include one or more power supplies 2626, one or more wired or wireless network interfaces 2650, one or more input/output interfaces 2658, and/or one or more operating systems 2641, for example, Windows ServerTM, Mac OS XTM, UnixTM, LinuxTM, or FreeBSDTM.

The CPU 2622 in the server 140 may be configured to perform the audio processing method in the embodiments of this disclosure.

An embodiment of this disclosure further provides a computer-readable storage medium, the computer-readable storage medium being configured to store program code, and the program code being configured to perform the audio processing method according to the foregoing embodiments.

An embodiment of this disclosure further provides a computer program product, the computer program product including a computer program. A processor of a computer device reads and executes the computer program, so that the computer device performs and implements the foregoing audio processing method.

The terms "first", "second", "third", "fourth", and the like (if exists) in the specification and the foregoing accompanying drawings are configured for distinguishing similar content, and do not need to be configured for describing a particular sequence or order. Data used in this way is interchangeable in a suitable case, so that the embodiments of this disclosure described herein can be implemented in a sequence in addition to the sequence shown or described herein. In addition, terms "include", "comprises", and any variants thereof are intended to cover a non-exclusive inclusion, for example, a process, method, system, product, or apparatus that includes a series of operations or units is not necessarily limited to the operations or units specified expressly, but may include other operations or units not specified expressly or may include operations or units inherent to the process, method, product or apparatus.

In the embodiments of this disclosure, "at least one" means one or more, and "a plurality of" means two or more. The term "and/or" describes an association relationship between associated content and represents that three relationships may exist. For example, "A and/or B" may represent the following three cases: Only A exists, only B exists, and both A and B exist, where A and B may be singular or plural. The character "/" generally represents an "or" relationship between the associated content. "At least one of the following items" or a similar expression means any combination of these items, including a single item or any combination of a plurality of items. For example, at least one of a, b, or c may represent a, b, c, "a and b", "a and c", "b and c", or "a, b, and c", where a, b, and c may be singular or plural.

In the descriptions of the embodiments of this disclosure, a plurality of (or several) means two or more. More than, less than, exceeding, and the like are understood as excluding this number, and above, below, within, and the like are understood as including this number.

In the embodiments of this disclosure, the term "module" or "unit" refers to a computer program or a part of the computer program that has a predetermined function, which works together with other relevant parts to achieve a predetermined objective, and may be wholly or partially implemented by using software, hardware (such as a processing circuit or a memory), or a combination thereof. Similarly, one processor (or a plurality of processors or memories) can be configured to implement one or more modules or units. In addition, each module or unit may be a part of an overall module or unit including a function of the module or unit.

In the several embodiments provided in the embodiments of this disclosure, the disclosed system, apparatus, and method may be implemented in other manners. For example, the foregoing described apparatus embodiments are merely examples. For example, the unit division is merely logical function division and there may be other division manners during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and components displayed as units may or may not be physical units, that is, may be located in one position, or may be distributed on a plurality of network units. A part of or all of the units may be selected according to actual needs to achieve the objectives of the solutions of the embodiments.

In addition, functional units in the embodiments of this disclosure may be integrated into one processing unit, or each of the units may exist alone physically, or two or more units are integrated into one unit. The integrated unit may be implemented in a form of hardware, or may be implemented in a form of a software function unit.

When the integrated unit is implemented in a form of a software functional unit and sold or used as an independent product, the integrated unit may be stored in a computer-readable storage medium. Based on such an understanding, the technical solutions of the embodiments of this disclosure essentially, or the part contributing to the related technology, or all or some of the technical solutions may be implemented in a form of a software product. The computer software product is stored in a storage medium and includes several instructions for instructing a computer apparatus (which may be a personal computer, a server, a network apparatus, or the like) to perform all or some of the operations of the methods described in the embodiments of this disclosure. The foregoing storage medium includes various media capable of storing program codes, such as, a USB flash drive, a mobile hard disk, a read only memory (ROM), a random access memory (RAM), a magnetic disk, or an optical disc.

The various implementations provided in the embodiments of this disclosure may be randomly combined to achieve different technical effects.

The foregoing specifically describes implementations of the embodiments of this disclosure, but the embodiments of this disclosure are not limited to the foregoing implementations. A person skilled in the art may make various equivalent variations or replacements without departing from the spirit of the embodiments of this disclosure. All such equivalent variations or replacements fall within the scope defined by the claims of the embodiments of this disclosure.

## Claims

1. An audio processing method, executable by an electronic device, the method comprising:
receiving an audio synthesis request, the audio synthesis request comprising input audio data to be synthesized;
generating chunk hidden vectors of a plurality of chunks based on the input audio data, each chunk comprising a plurality of consecutive audio frames in target audio, the target audio being audio to be synthesized based on the input audio data in the audio synthesis request, the plurality of chunks being sorted based on a sequence of audio frames comprised in the plurality of chunks, and audio frames of two adjacent chunks being consecutive; and
inputting the chunk hidden vectors into an audio generation network based on a sequence of the plurality of chunks, the audio generation network being configured to perform the following processing:
for each chunk in the target audio, generating an audio frame based on a chunk hidden vector of the chunk and a chunk hidden vector of a preceding chunk of the chunk while playing the preceding chunk of the chunk, and adding the generated audio frame to a target playing queue for playing.

2. The audio processing method according to claim 1, wherein the generating chunk hidden vectors of a plurality of chunks based on the input audio data comprises:
inputting the input audio data into a first neural network for feature extraction, to obtain an audio frame feature of each audio frame in the target audio;
for each chunk of the plurality of chunks, generating a chunk feature vector based on the audio frame feature and a correspondence between the chunks and the audio frames; and
inputting the chunk feature vector of each chunk into a second neural network for convolution, to obtain a chunk hidden vector of each chunk.

3. The audio processing method according to claim 2, wherein the inputting the chunk feature vector of each chunk into a second neural network for convolution, to obtain a chunk hidden vector of each chunk comprises:
for a first chunk in the plurality of chunks, obtaining a first intermediate parameter generated in the second neural network by a second chunk preceding the first chunk; and
performing, by using the second neural network, convolution based on the first intermediate parameter, a chunk feature vector of the first chunk, and a chunk feature vector of a third chunk following the first chunk, to obtain a chunk hidden vector of the first chunk.

4. The audio processing method according to claim 3, wherein the inputting the plurality of chunk hidden vectors into an audio generation network based on a sequence of the chunks comprises:
inputting the chunk hidden vector of the first chunk into the audio generation network when the chunk hidden vector of the first chunk is generated, wherein inputting the chunk hidden vector of the first chunk into the audio generation network is performed before the third chunk following the first chunk in the plurality of chunks is generated, or after the third chunk following the first chunk in the plurality of chunks is generated.

5. The audio processing method according to claim 3, wherein the performing, by using the second neural network, convolution based on the first intermediate parameter, a chunk feature vector of the first chunk, and a chunk feature vector of a third chunk following the first chunk, to obtain a chunk hidden vector of the first chunk comprises:
obtaining a key weight matrix, a value weight matrix, and a query weight matrix of the chunk feature vector of the first chunk;
determining a first key and a first value corresponding to the first chunk based on the first intermediate parameter, the chunk feature vector of the first chunk, the chunk feature vector of the third chunk following the first chunk, the key weight matrix, and the value weight matrix; and
determining the chunk hidden vector of the first chunk based on a self-attention calculation result of the query weight matrix, the first key, the first value, and the chunk feature vector of the first chunk.

6. The audio processing method according to claim 3, further comprising:
when the first chunk is a 1^{st} chunk in the plurality of chunks, performing, by using the second neural network, convolution based on the chunk feature vector of the first chunk and the chunk feature vector of the third chunk following the first chunk, to obtain the chunk hidden vector of the first chunk.

7. The audio processing method according to claim 6, wherein the determining the chunk hidden vector of the first chunk based on a self-attention calculation result of the query weight matrix, the first key, the first value, and the chunk feature vector of the first chunk comprises:
performing normalization processing on the chunk feature vector of the first chunk, to obtain a normalized chunk feature vector; and
summing up a self-attention calculation result of the query weight matrix, the first key, the first value, and the normalized chunk feature vector with the chunk feature vector of the first chunk, and determining the chunk hidden vector of the first chunk based on a summation result.

8. The audio processing method according to claim 6, wherein the determining the chunk hidden vector of the first chunk based on a self-attention calculation result of the query weight matrix, the first key, the first value, and the chunk feature vector of the first chunk comprises:
determining an intermediate hidden vector based on the self-attention calculation result of the query weight matrix, the first key, the first value, and the chunk feature vector of the first chunk;
obtaining a last vector of a preceding chunk hidden vector corresponding to the second chunk preceding the first chunk; and
determining the chunk hidden vector of the first chunk based on the last vector and the intermediate hidden vector.

9. The audio processing method according to claim 8, wherein the determining the chunk hidden vector of the first chunk based on the last vector and the intermediate hidden vector comprises:
splicing the last vector to a left side of the intermediate hidden vector, to obtain a first spliced vector;
deleting a sub-vector of a preset length starting from an end of the first spliced vector, to obtain a second spliced vector; and
performing causal convolution processing on the second spliced vector, to obtain the chunk hidden vector of the first chunk.

10. The audio processing method according to any one of claims 2 to 9, wherein the first neural network, the second neural network, and the audio generation network are jointly trained through the following process:
obtaining first sample audio data, first sample target audio, a first sample audio feature, and a first sample audio frame hidden vector;
inputting the first sample audio data into the first neural network for feature extraction, to obtain a first predicted audio frame feature of each audio frame in the first sample target audio and a first predicted audio feature of the first sample target audio;
obtaining, by using the second neural network, a first predicted chunk hidden vector of each chunk based on the first predicted audio frame feature comprised in each chunk;
dividing the first sample audio frame hidden vector into a plurality of chunks to obtain first sample chunk hidden vectors of the plurality of chunks, and inputting the first sample chunk hidden vectors into the audio generation network based on a sequence of the chunks to obtain first predicted target audio;
calculating a first loss function based on the first predicted audio feature and the first sample audio feature, calculating a second loss function based on the first predicted chunk hidden vector of each chunk and the first sample audio frame hidden vector, and calculating a third loss function based on the first predicted target audio and the first sample target audio; and
training the first neural network, the second neural network, and the audio generation network by using the first loss function, the second loss function, and the third loss function.

11. The audio processing method according to claims 1 to 10, wherein the generating chunk hidden vectors of a plurality of chunks based on the input audio data comprises:
inputting the input audio data into a third neural network for feature extraction, to obtain an audio frame feature of each audio frame in the target audio;
inputting the audio frame feature of each audio frame into a fourth neural network for convolution, to obtain an audio frame hidden vector corresponding to each audio frame; and
generating a chunk hidden vector based on the audio frame hidden vector and the correspondence between the chunks and the audio frames.

12. The audio processing method according to any one of claims 1 to 11, wherein the generating, for each chunk in the target audio, an audio frame of the chunk based on a chunk hidden vector of the chunk and a chunk hidden vector of a preceding chunk of the chunk while playing the preceding chunk of the chunk, and adding the generated audio frame to a target playing queue for playing comprises:
for a 1^{st} chunk in the target audio, generating an audio frame of the 1^{st} chunk based on a 1^{st} chunk hidden vector, and adding the audio frame of the 1^{st} chunk to the target playing queue for playing; and
for a subsequent chunk following the 1^{st} chunk, generating an audio frame of the subsequent chunk based on a chunk hidden vector of the subsequent chunk and a chunk hidden vector of a preceding chunk of the subsequent chunk, and adding the audio frame of the subsequent chunk to the target playing queue for playing, generating the audio frame of the subsequent chunk and adding the audio frame of the subsequent chunk to the target playing queue being performed simultaneously with playing the preceding chunk of the subsequent chunk.

13. The audio processing method according to any one of claims 1 to 12, wherein the generating an audio frame of the chunk based on a chunk hidden vector of the chunk and a chunk hidden vector of a preceding chunk of the chunk, and adding the generated audio frame to a target playing queue for playing comprises:
padding a target chunk hidden vector of the chunk with the chunk hidden vector of the preceding chunk of the chunk, to obtain an expanded audio frame hidden vector; and
generating the audio frame of the chunk based on the expanded audio frame hidden vector, and adding the generated audio frame to the target playing queue for playing.

14. The audio processing method according to claim 13, wherein the padding a target chunk hidden vector of the chunk with the chunk hidden vector of the preceding chunk of the chunk, to obtain an expanded audio frame hidden vector comprises:
obtaining a padding hidden vector from the chunk hidden vector of the preceding chunk of the chunk based on a preset padding length; and
padding a left side of the target chunk hidden vector of the chunk with the padding hidden vector, to obtain the expanded audio frame hidden vector.

15. The audio processing method according to claim 13, wherein the padding a target chunk hidden vector of the chunk with the chunk hidden vector of the preceding chunk of the chunk, to obtain an expanded audio frame hidden vector comprises:
inputting the chunk and a plurality of preceding chunks of the chunk into a semantic association prediction model, to obtain a semantic association between the chunk and each preceding chunk of the chunk;
determining a target chunk from the plurality of preceding chunks of the chunk based on the semantic association; and
padding the target chunk hidden vector of the chunk based on a chunk hidden vector of the target chunk, to obtain the expanded audio frame hidden vector.

16. The audio processing method according to claim 15, wherein the padding the target chunk hidden vector of the chunk based on a chunk hidden vector of the target chunk, to obtain the expanded audio frame hidden vector comprises:
determining a weight of the target chunk based on a semantic association between the target chunk and the chunk; and
padding the target chunk hidden vector of the chunk based on the chunk hidden vector of the target chunk and the weight of the target chunk, to obtain the expanded audio frame hidden vector.

17. An audio processing apparatus, comprising:
a receiving unit, configured to receive an audio synthesis request, the audio synthesis request comprising input audio data to be synthesized;
a first generation unit, configured to generate chunk hidden vectors of a plurality of chunks based on the input audio data, each chunk comprising a plurality of consecutive audio frames in target audio, the target audio being audio to be synthesized based on the input audio data in the audio synthesis request, and the plurality of chunks being sorted based on a sequence of audio frames comprised in the plurality of chunks; and
a second generation unit, configured to input the chunk hidden vectors into an audio generation network based on a sequence of the plurality of chunks, the audio generation network being configured to perform the following processing: for each chunk in the target audio, generating an audio frame based on a chunk hidden vector of the chunk and a chunk hidden vector of a preceding chunk of the chunk while playing the preceding chunk of the chunk, and adding the generated audio frame to a target playing queue for playing.

18. An electronic device, comprising a memory and a processor, the memory having a computer program stored therein, and the processor, when executing the computer program, implementing the audio processing method according to any one of claims 1 to 16.

19. A computer-readable storage medium, having a computer program stored therein, the computer program, when executed by a processor, implementing the audio processing method according to any one of claims 1 to 16.

20. A computer program product, comprising a computer program, the computer program, when read and executed by a processor of a computer device, causing the computer device to perform the audio processing method according to any one of claims 1 to 16.
